(19) Europäisches Patentamt / European Patent Office / Office européen des brevets

(11) EP 4 270 931 A1

(12) **EUROPEAN PATENT APPLICATION**
published in accordance with Art. 153(4) EPC

(43) Date of publication:
**01.11.2023 Bulletin 2023/44**

(21) Application number: **21912521.8**

(22) Date of filing: **04.02.2021**

(51) International Patent Classification (IPC):
**H04N 5/359** (2011.01)   **H04N 9/64** (2023.01)

(86) International application number:
**PCT/CN2021/075315**

(87) International publication number:
**WO 2022/141743 (07.07.2022 Gazette 2022/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2020 CN 202011582503**

(71) Applicant: **GUANGDONG OPPO MOBILE
TELECOMMUNICATIONS
CORP., LTD.
Dongguan, Guangdong 523860 (CN)**

(72) Inventors:
• **YANG, Xin
Dongguan, Guangdong 523860 (CN)**
• **LI, Xiaotao
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **IMAGE PROCESSING METHOD, IMAGE PROCESSING SYSTEM, ELECTRONIC DEVICE, AND READABLE STORAGE MEDIUM**

(57)   A method for image processing, a system for image processing system (100), an electronic device (1000), and a readable storage medium (400). The method for image processing comprises: (01) obtaining an original image obtained by exposing the pixel array; (02) obtaining a colorful image based on all the colorful image pixels in the same subunit, and obtaining a panchromatic image based on all the panchromatic image pixels in the same subunit and (03) processing the colorful image based on the panchromatic image to obtain a first color target image, a second color target image and a third color target image.

FIG.10

**Description**

Priority information

This application claims the priority and benefit of the patent application No. 202011582503.6 filed with the State Intellectual Property Office of China on December 28, 2020, which is hereby incorporated by reference in its entirety.

Technical field

The present disclosure relates to the technical field of image processing, and in particular to an image processing method, an image processing system, electronic equipment, and a readable storage medium.

Background

Electronic devices such as mobile phones may be provided with a camera to realize a camera function. An image sensor for receiving light may be arranged in the camera. A filter array may be provided in the image sensor. In order to improve the signal-to-noise ratio of images acquired by electronic devices such as mobile phones, an image sensor with four-in-one pixel arrangement will be used.

Summary

Embodiments of the present disclosure provide a method and system for image processing, electronic device, and computer-readable storage medium.

In a first aspect, a method for image processing is provided according to some embodiments of the present disclosure, the method is for an image sensor, the image sensor comprises a pixel array, the pixel array comprises a plurality of panchromatic photosensitive pixels and a plurality of colorful photosensitive pixels, the plurality of colorful photosensitive pixels comprise a first color photosensitive pixel, a second color photosensitive pixel and a third color photosensitive pixel with different spectral responses, the plurality of colorful photosensitive pixels have a narrower spectral response than the plurality of panchromatic photosensitive pixel, and both the first color photosensitive pixel and the third color photosensitive pixels have a narrower spectral response than the second color photosensitive pixels, the pixel array comprises a plurality of minimal repeating units, each of the minimal repeating unit comprises a plurality of subunits, each of the subunit comprises at least one single-color photosensitive pixel and at least one panchromatic photosensitive pixel; the method for image processing comprising:

    obtaining an original image by exposing the pixel array, the image pixels in the original image comprising colorful image pixels and panchromatic image pixels;
    obtaining a colorful image based on all the colorful image pixels in the subunit, and obtaining a panchromatic image based on all the panchromatic image pixels in the subunit, the image pixels in the colorful image being in a Bayer array arrangement; and
    obtaining a first color target image, a second color target image and a third color target image by processing the colorful image based on the panchromatic image, wherein, all image pixels in the first color target image are the first image pixel, all image pixels in the second color target image are the second color image pixels, and all image pixels in the third color target image are the third color image pixels.

In a second aspect, a system for image processing is provided according to some embodiments of the present disclosure, the system comprises:

    an image sensor, the image sensor comprises a pixel array, the pixel array comprises a plurality of panchromatic photosensitive pixels and a plurality of colorful photosensitive pixels, the plurality of colorful photosensitive pixels comprise a first color photosensitive pixel, a second color photosensitive pixel and a third color photosensitive pixel with different spectral responses, the plurality of colorful photosensitive pixels have a narrower spectral response than the plurality of panchromatic photosensitive pixel, and both the first color photosensitive pixel and the third color photosensitive pixels have a narrower spectral response than the second color photosensitive pixels, the pixel array comprises a plurality of minimal repeating units, each of the minimal repeating unit comprises a plurality of subunits, each of the subunit comprises at least one single-color photosensitive pixel and at least one panchromatic photosensitive pixel; and
    a processor, the processor is configured to
    obtain an original image by exposing the pixel array, the image pixels in the original image comprising colorful image pixels and panchromatic image pixels;

obtain a colorful image based on all the colorful image pixels in the subunit, and obtain a panchromatic image based on all the panchromatic image pixels in the subunit, the image pixels in the colorful image being in a Bayer array arrangement; and

obtain a first color target image, a second color target image and a third color target image by processing the colorful image based on the panchromatic image, wherein, all image pixels in the first color target image are the first image pixel, all image pixels in the second color target image are the second color image pixels, and all image pixels in the third color target image are the third color image pixels.

In a third aspect, an electronic device is provided according to some embodiments of the present disclosure, the electronic device comprises a lens, a housing, and the system for image processing described above, the lens and the system for image processing are couple to the housing, the lens and the image sensor of the system for image processing are configured to form an image by cooperation.

In a fourth aspect, a non-transitory computer-readable storage medium storing computer instructions is provided according to some embodiments of the present disclosure, when the computer instructions are executed by a processor, the processor executes the method for image processing described above.

Additional aspects and advantages of embodiments of the disclosure will be set forth in the description which follows, and in part will be obvious from the description, or may be learned by practice of the disclosure.

Brief Description of Figures

The above additional aspects and advantages of the present disclosure will become apparent and easily understood from the description of the embodiments in conjunction with the following drawings, wherein:

FIG.1 illustrates a schematic flow diagram of an image processing method in some embodiments of the present disclosure;

FIG.2 illustrates a schematic structural diagram of an image processing system in some embodiments of the present disclosure;

FIG.3 illustrates a schematic diagram of a pixel array in some embodiments of the present disclosure;

FIG.4 illustrates a schematic cross-sectional view of a photosensitive pixel in some embodiments of the present disclosure;

FIG.5 illustrates a pixel circuit diagram of a photosensitive pixel in some embodiments of the present disclosure;

FIG.6 to FIG.8 illustrate schematic diagrams of the arrangement of the smallest repeating unit in the pixel array in some embodiments of the present disclosure;

FIG.9 illustrates a schematic diagram of the principle of acquiring a color image and a panchromatic image in some embodiments of the present disclosure;

FIG. 10 illustrates a schematic flowchart of an image processing method in some embodiments of the present disclosure;

FIG. 11 illustrates a schematic diagram of the principle of color image separation in some embodiments of the present disclosure;

FIG. 12 illustrates a schematic diagram of the principle of acquiring a target pixel of a second color in some embodiments of the present disclosure;

FIG. 13 illustrates a schematic flowchart of an image processing method in some embodiments of the present disclosure;

FIG. 14 illustrates a schematic diagram of the principle of copying the boundary of the second color initial image in some embodiments of the present disclosure;

FIG.15 illustrates a schematic flowchart of an image processing method in some embodiments of the present disclosure;

FIG. 16 illustrates a schematic diagram of the principle of obtaining the first matrix according to the first window in the initial image of the second color in some embodiments of the present disclosure;

FIG. 17 illustrates a schematic flowchart of an image processing method in some embodiments of the present disclosure;

FIG. 18 illustrates a schematic diagram of the principle of obtaining the second matrix according to the second window in the panchromatic image according to some embodiments of the present disclosure;

FIG. 19 to FIG.20 illustrate schematic flowcharts of image processing methods in some embodiments of the present disclosure;

FIG.21 to FIG.22 illustrate schematic diagrams of the principle of acquiring the target pixel of the second color in some embodiments of the present disclosure;

FIG.23 illustrates a schematic flowchart of an image processing method in some embodiments of the present disclosure;

FIG.24 illustrates a schematic diagram of the principle of acquiring the target pixel of the second color in some embodiments of the present disclosure;

FIG.25 illustrates a schematic flowchart of an image processing method in some embodiments of the present disclosure;

FIG.26 illustrates a schematic diagram of the principle of processing the initial image of the first color according to the target image of the second color to obtain the target image of the first color according to some embodiments of the present disclosure;

FIG.27 illustrates a schematic diagram of the principle of processing an initial image of a third color according to a target image of a second color to obtain a target image of a third color according to some embodiments of the present disclosure;

FIG.28 to FIG.29 illustrate schematic flowcharts of image processing methods in some embodiments of the present disclosure;

FIG.30 illustrates a schematic structural diagram of an electronic device according to an embodiment of the present disclosure;

FIG.31 illustrates a schematic diagram of interaction between a non-volatile computer-readable storage medium and a processor according to an embodiment of the present disclosure.

Detailed Description

Embodiments of the present disclosure are described in detail below, examples of which are shown in the drawings, wherein the same or similar reference numerals denote the same or similar elements or elements having the same or similar functions throughout. The embodiments described below by referring to the drawings are examples, are only for explaining the embodiments of the present disclosure, and should not be construed as limiting the embodiments of the present disclosure.

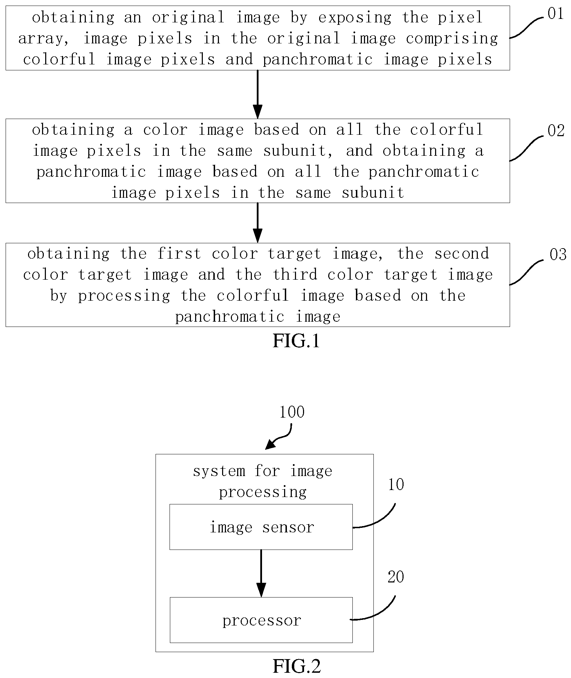

Please refer to FIG. 1, FIG.2 and FIG.3, the present disclosure provides a method for image processing for an image sensor 10. The image sensor 10 includes a pixel array 11, and the pixel array 11 includes a plurality of panchromatic photosensitive pixels W and a plurality of colorful photosensitive pixels. The color photosensitive pixel includes a first color photosensitive pixel A, a second color photosensitive pixel B, and a third color photosensitive pixel C with different spectral responses, wherein the colorful photosensitive pixels have a narrower spectral response than the panchromatic photosensitive pixel W, and the second color photosensitive pixel has a narrower spectral response than the panchromatic photosensitive pixel W, and The photosensitive pixel A of the first color and the photosensitive pixel C of the third color have a narrower spectral response than the second color photosensitive pixel B. The pixel array 11 includes a plurality of minimal repeating units, each of which includes a plurality of subunits, and each subunit includes at least one single-color photosensitive pixel and at least one panchromatic photosensitive pixel W. The method for image processing includes:

01: obtaining an original image by exposing the pixel array 11, the image pixels in the original image comprising colorful image pixels and panchromatic image pixels;

02: obtaining a colorful image based on all the colorful image pixels in the subunit, and obtaining a panchromatic image based on all the panchromatic image pixels in the subunit, the image pixels in the colorful image being in a Bayer array arrangement; and

03: obtaining a first color target image, a second color target image and a third color target image by processing the colorful image based on the panchromatic image, wherein, all image pixels in the first color target image are the first image pixel, all image pixels in the second color target image are the second color image pixels, and all image pixels in the third color target image are the third color image pixels.

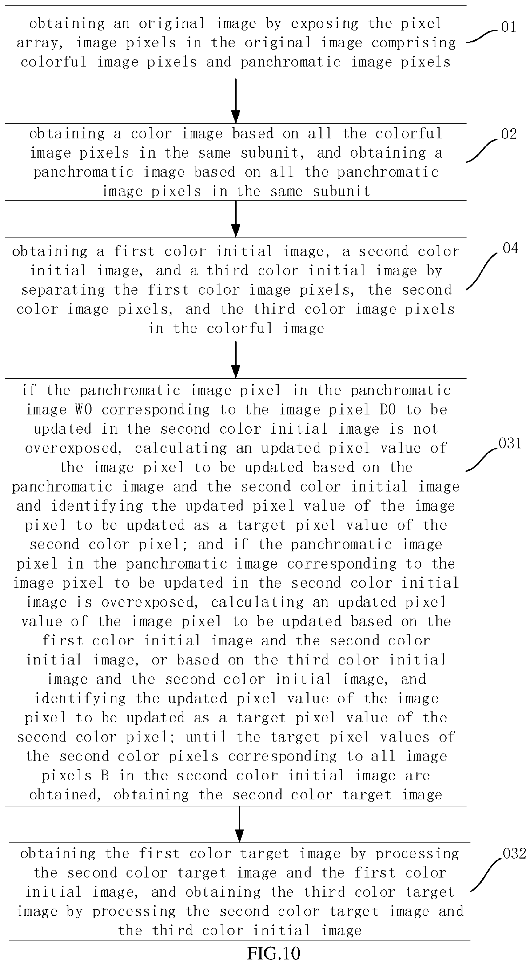

Please refer to FIG. 10, in some embodiments, the method for image processing further comprises:

04: obtaining a first color initial image A, a second color initial image B, and a third color initial image C by separating the first color image pixels, the second color image pixels, and the third color image pixels in the colorful image. Step 03: the obtaining a first color target image, a second color target image and a third color target image by processing the colorful image based on the panchromatic image comprising:

031: if the panchromatic image pixel in the panchromatic image W0 corresponding to the image pixel D0 to be updated in the second color initial image is not overexposed, calculating an updated pixel value of the image pixel D0 to be updated based on the panchromatic image and the second color initial image and identifying the updated pixel value of the image pixel to be updated as a target pixel value of the second color pixel; and if the panchromatic image pixel in the panchromatic image W0 corresponding to the image pixel D0 to be updated in the second color initial image is overexposed, calculating an updated pixel value of the image pixel to be updated based on the first color initial image and the second color initial image, or based on the third color initial image and the second color initial image, and identifying the updated pixel value of the image pixel to be updated as a target pixel value of the second color pixel; until the target pixel values of the second color pixels corresponding to all image pixels B in the second color initial image are obtained, obtaining the second color target image;

032: obtaining the first color target image by processing the second color target image and the first color initial image, and obtaining the third color target image by processing the second color target image and the third color initial image.

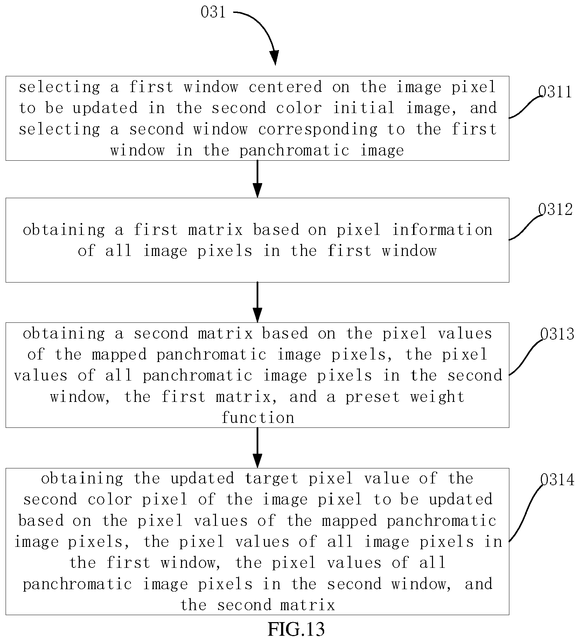

Please refer to FIG.10 and FIG.13, in some embodiments, the image pixel of the second color initial image comprises a second color image pixel B and a null pixel N, the pixel value of the null pixel being zero. the calculating an updated pixel value of the image pixel D0 to be updated based on the panchromatic image and the second color initial image and identifying the updated pixel value of the image pixel to be updated as a target pixel value of the second color pixel comprising:

0311: selecting a first window C1 centered on the image pixel D0 to be updated in the second color initial image, and selecting a second window C2 corresponding to the first window C1 in the panchromatic image, the panchromatic image pixels W0 at the center of the second window C2 correspond to the image pixel D0 to be updated and identified as a mapped panchromatic image pixel W0;

0312: obtaining a first matrix I1 based on pixel information of all image pixels in the first window C1;

0313: obtaining a second matrix I2 based on the pixel values of the mapped panchromatic image pixels W0, the pixel values of all panchromatic image pixels W in the second window C2, the first matrix I1, and a preset weight function F(x); and

0314: obtaining the updated target pixel value of the second color pixel of the image pixel D0 to be updated based on the pixel values of the mapped panchromatic image pixels W0, the pixel values of all image pixels in the first window C1, the pixel values of all panchromatic image pixels W in the second window C2, and the second matrix I2.

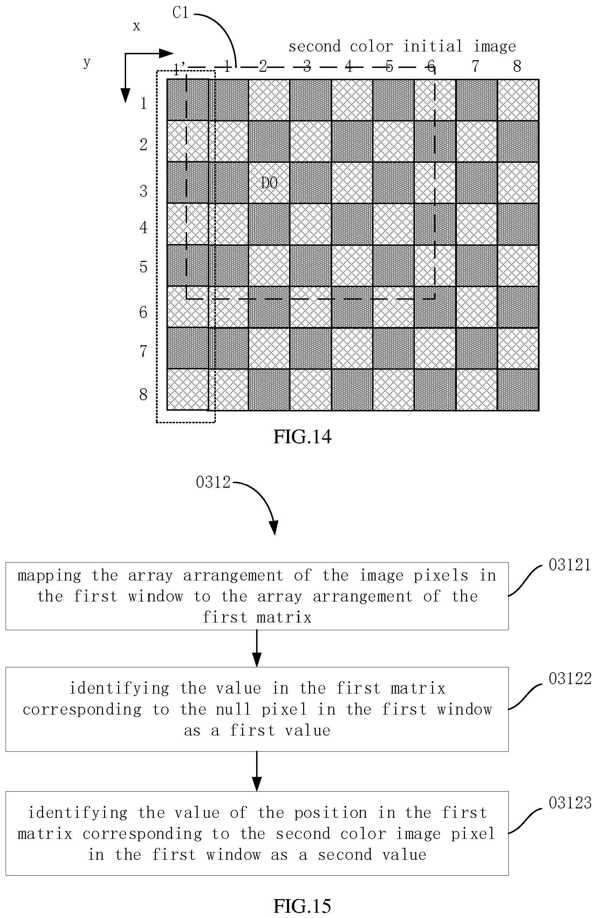

Please refer to FIG.13 and FIG.15, in some embodiments, step 0312: obtaining a first matrix based on pixel information of all image pixels in the first window, comprising:

03121: mapping the array arrangement of the image pixels in the first window C1 to the array arrangement of the first matrix I1;

03122: identifying the value in the first matrix I1 corresponding to the null pixel in the first window C1 as a first value; and

03123: identifying the value of the position in the first matrix I1 corresponding to the second color image pixel B in the first window as a second value.

In some embodiments, the image pixels in the first window and the second window are arranged in M*M, M representing an odd number and the first matrix being arranged in M*M.

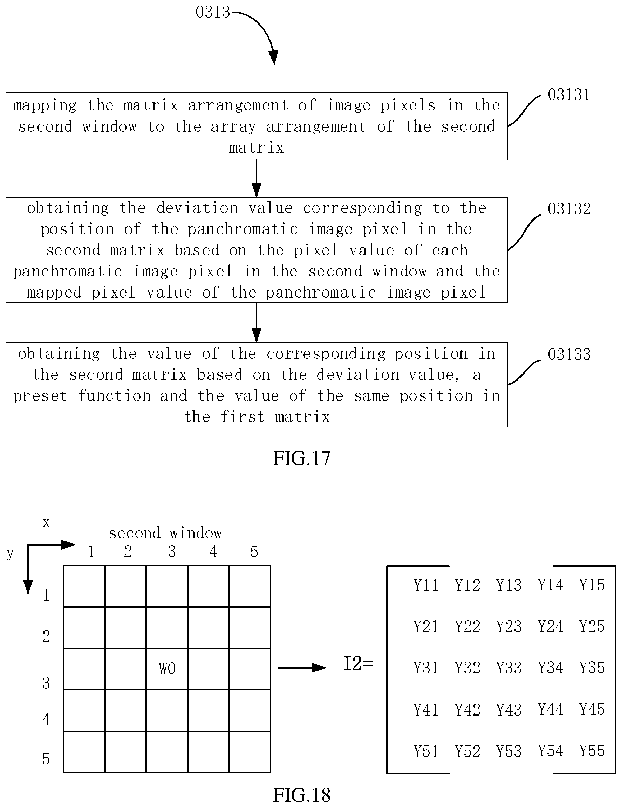

Please refer to FIG.13 and FIG.17, in some embodiments, step 0313: obtaining a second matrix I2 based on the pixel values of the mapped panchromatic image pixels W0, the pixel values of all panchromatic image pixels W in the second window C2, the first matrix I1, and a preset weight function F(x), comprises:

03131: mapping the matrix arrangement of image pixels in the second window C2 to the array arrangement of the second matrix I2;

03132: obtaining the deviation value L1 corresponding to the position of the panchromatic image pixel W in the second matrix I2 based on the pixel value of each panchromatic image pixel W in the second window C2 and the mapped pixel value of the panchromatic image pixel W0;

03133: obtaining the value of the corresponding position in the second matrix I2 based on the deviation value L1, a preset function F(x) and the value of the same position in the first matrix I1.

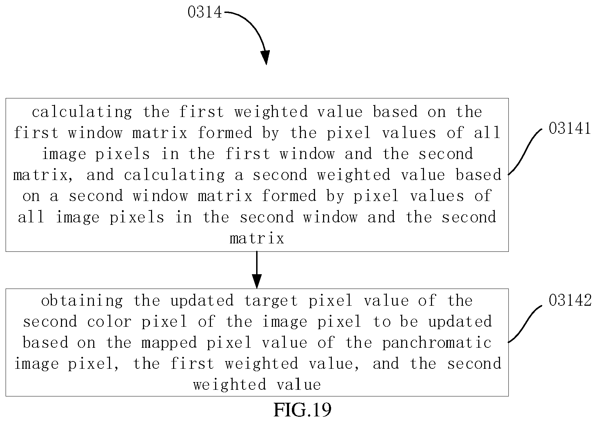

Please refer to FIG.13 and FIG.19, in some embodiments, step 0314: obtaining the updated target pixel value of the second color pixel of the image pixel to be updated based on the pixel values of the mapped panchromatic image pixels, the pixel values of all image pixels in the first window, the pixel values of all panchromatic image pixels in the second window, and the second matrix, comprises:

03141, calculating the first weighted value M1 based on the first window matrix N1 formed by the pixel values of all image pixels in the first window C1 and the second matrix I2, and calculating a second weighted value M2 based on a second window matrix N2 formed by pixel values of all image pixels in the second window C2 and the second matrix I2;

03142, obtaining the updated target pixel value of the second color pixel of the image pixel D0 to be updated based on the mapped pixel value of the panchromatic image pixel W0, the first weighted value M1, and the second weighted value M2.

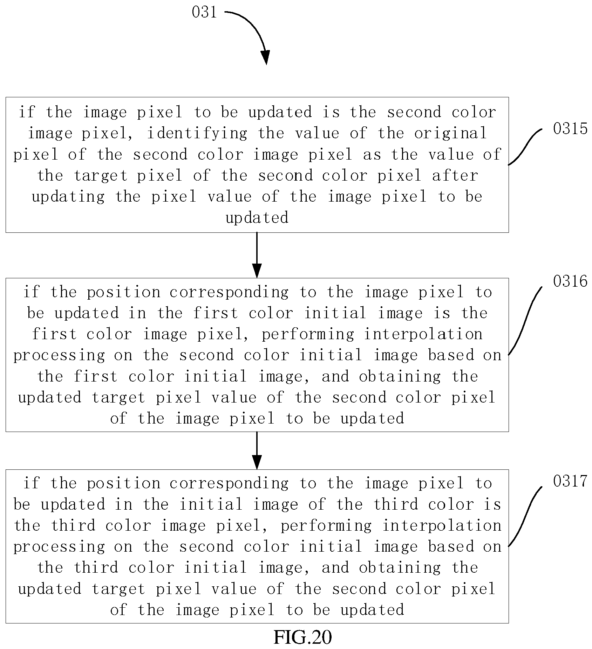

Please refer to FIG. 10 and FIG.20, in some embodiments, the image pixel of the first color initial image comprises a first color image pixel A and a null pixel N, the image pixel of the third color initial image comprises a third color image pixel C and a null pixel N, the value of the null N is zero; calculating an updated pixel value of the image pixel to be updated based on the first color initial image and the second color initial image, or based on the third color initial image and the second color initial image, and identifying the updated pixel value of the image pixel to be updated as a target pixel value of the second color pixel, comprises:

0315: if the image pixel D0 to be updated is the second color image pixel B, identifying the value of the original pixel of the second color image pixel B as the value of the target pixel of the second color pixel after updating the pixel value D1 of the image pixel D0 to be updated;

0316: if the position corresponding to the image pixel D0 to be updated in the first color initial image is the first color image pixel A, performing interpolation processing on the second color initial image based on the first color initial image, and obtaining the updated target pixel value D1 of the second color pixel of the image pixel D0 to be updated;

0317: if the position corresponding to the image pixel D0 to be updated in the initial image of the third color is the third color image pixel C, performing interpolation processing on the second color initial image based on the third color initial image, and obtaining the updated target pixel value D1 of the second color pixel of the image pixel D1 to be updated.

Please refer to FIG.20, in some embodiments, obtaining the first color target image by processing the second color target image and the first color initial image, and obtaining the third color target image by processing the second color target image and the third color initial image, comprises:

0321: obtaining the first color target image by performing a bilateral filtering process on the first color initial image based on the second color target image, and obtaining the third color target image by performing a bilateral filtering process on the third color initial image based on the second color target image.

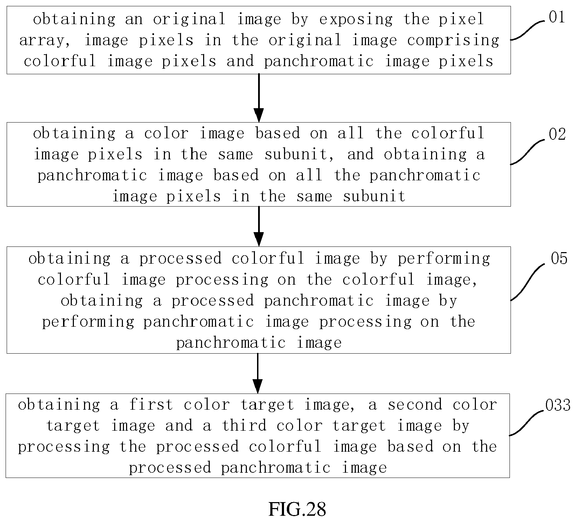

Please refer to FIG.28. in some embodiments, the method for image processing further comprises:

05: obtaining a processed colorful image by performing colorful image processing on the colorful image, obtaining a processed panchromatic image by performing panchromatic image processing on the panchromatic image; step 03: obtaining a fully arranged first color target image, a fully arranged second color target image and a fully arranged third color target image by processing of the color image based on the panchromatic image comprising:

033: obtaining a first color target image, a second color target image and a third color target image by processing the processed colorful image based on the processed panchromatic image.

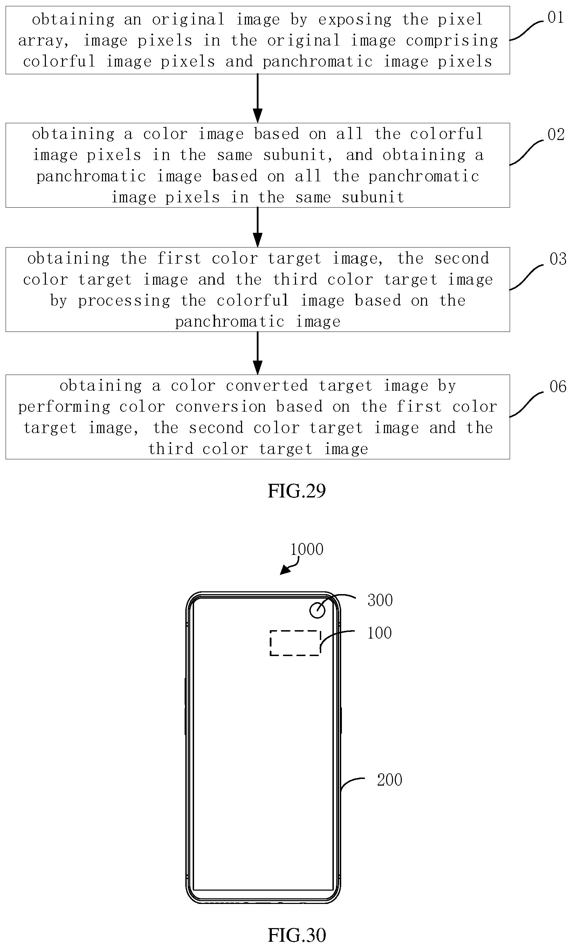

Please refer FIG.29, in some embodiments, the method for image processing further comprises:

06: obtaining a color converted target image by performing color conversion based on the first color target image, the second color target image and the third color target image.

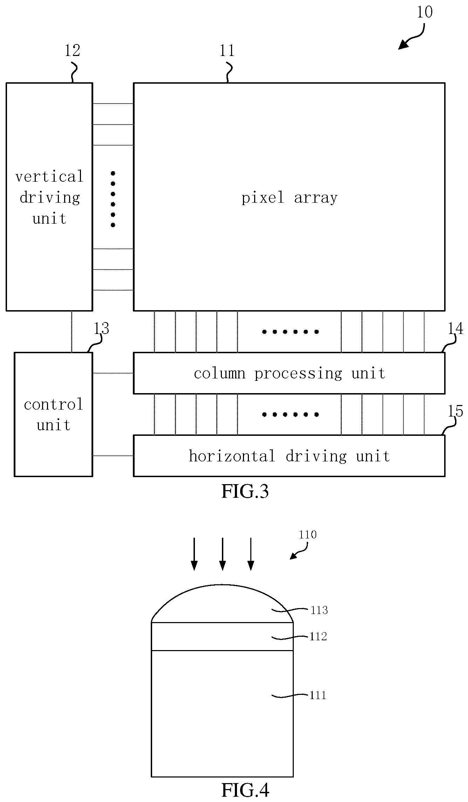

Please refer to FIG.1 and FIG.2, the present disclosure provides a system 100 for image processing, the system 100 for image processing comprises an image sensor 10 and a processor 20. The image sensor 10 comprises a pixel array 11 (illustrated in FIG.3), the pixel array 11 comprises a plurality of panchromatic photosensitive pixels W and a plurality of colorful photosensitive pixels, the plurality of colorful photosensitive pixels comprise a first color photosensitive pixel A, a second color photosensitive pixel B and a third color photosensitive pixel C with different spectral responses, the plurality of colorful photosensitive pixels W have a narrower spectral response than the plurality of panchromatic photosensitive pixel, and both the first color photosensitive pixel A and the third color photosensitive pixels C have a narrower spectral response than the second color photosensitive pixels B, the pixel array 11 comprises a plurality of minimal repeating units, each of the minimal repeating unit comprises a plurality of subunits, each of the subunit comprises at least one single-color photosensitive pixel and at least one panchromatic photosensitive pixel W. Step 01, step 02 and step 03 are all executed by the processor 20. That is to say, the processor 20 processor is configured to obtain an original image by exposing the pixel array, the image pixels in the original image comprising colorful image pixels and panchromatic image pixels; obtain a colorful image based on all the colorful image pixels in the subunit, and obtain a panchromatic image based on all the panchromatic image pixels W in the subunit, the image pixels in the colorful image being in a Bayer array arrangement; and obtain a first color target image, a second color target image and a third color target image by processing the colorful image based on the panchromatic image, wherein, all image pixels in the first color target image are the first image pixel A, all image pixels in the second color target image are the second color image pixels B, and all image pixels in the third color target image are the third color image pixels C.

Please refer to FIG.2 and FIG. 10, in some embodiments, the processor 20 is further configured to obtain a first color initial image, a second color initial image, and a third color initial image by separating the first color image pixels A, the second color image pixels B, and the third color image pixels C in the colorful image; if the panchromatic image pixel W in the panchromatic image corresponding to the image pixel D0 to be updated in the second color initial image is not overexposed, calculate an updated pixel value of the image pixel D0 to be updated based on the panchromatic image and the second color initial image and identifying the updated pixel value of the image pixel D0 to be updated as a target pixel value of the second color pixel; and if the panchromatic image pixel in the panchromatic image W corresponding to the image pixel D0 to be updated in the second color initial image is overexposed, calculate an updated pixel value of the image pixel D0 to be updated based on the first color initial image and the second color initial image, or based on the third color initial image and the second color initial image, and identify the updated pixel value of the image pixel to be updated as a target pixel value of the second color pixel; until the target pixel values of the second color pixels corresponding to all image pixels in the second color initial image are obtained, obtain the second color target image; and obtain the first color target image by processing the second color target image and the first color initial image, and obtain the third color target image by processing the second color target image and the third color initial image.

Please refer to FIG.2, FIG.10 and FIG.13, in some embodiments, the processor 20 is further configured to select a first window C1 centered on the image pixel D0 to be updated in the second color initial image, and select a second window C2 corresponding to the first window C1 in the panchromatic image, the panchromatic image pixels at the center of the second window C2 correspond to the image pixel D0 to be updated and identified as a mapped panchromatic image pixel W0; obtain a first matrix I1 based on pixel information of all image pixels in the first window C1; obtain a second matrix C2 based on the pixel values of the mapped panchromatic image pixels W0, the pixel values of all panchromatic image pixels in the second window C2, the first matrix I1 and a preset weight function $F(x)$; and obtain the updated target pixel value of the second color pixel of the image pixel to be updated based on the pixel values of the mapped panchromatic image pixels W0, the pixel values of all image pixels in the first window C1, the pixel values of all panchromatic image pixels in the second window C2, and the second matrix I2.

Please refer to FIG.2 and FIG.15, in some embodiments, the processor 20 is further configured to map the array arrangement of the image pixels in the first window C1 to the array arrangement of the first matrix I1; identify the value in the first matrix I1 corresponding to the null pixel in the first window C1 as a first value; and identify the value of the position in the first matrix I1 corresponding to the second color image pixel B in the first window C1 as a second value.

In some embodiments, the image pixels in the first window C1 and the second window C2 are arranged in M*M, M representing an odd number and the first matrix I1 being arranged in M*M.

Please refer to FIG.2 and FIG.17, in some embodiments, the processor 20 is further configured to map the matrix arrangement of image pixels in the second window C2 to the array arrangement of the second matrix I2; obtain the deviation value L1 corresponding to the position of the panchromatic image pixel W in the second matrix I2 based on the pixel value of each panchromatic image pixel W in the second window C2 and the mapped pixel value of the panchromatic image pixel W0; obtain the value of the corresponding position in the second matrix I2 based on the deviation value L1, a preset function $F(x)$ and the value of the same position in the first matrix I1.

Please refer to FIG.2 and FIG. 19, in some embodiments, the processor is further configured to calculate the first weighted value M1 based on the first window matrix N1 formed by the pixel values of all image pixels in the first window N1 and the second matrix I2, and calculate a second weighted value M2 based on a second window matrix N2 formed by pixel values of all image pixels in the second window C2 and the second matrix I2; obtain the updated target pixel value of the second color pixel of the image pixel D0 to be updated based on the mapped pixel value W0 of the panchromatic image pixel, the first weighted value M1, and the second weighted value M2.

Please refer to FIG.2 and FIG.20, in some embodiments, the processor is further configured to if the image pixel D0 to be updated is the second color image pixel B, identifying the value of the original pixel of the second color image pixel B as the value D1 of the target pixel of the second color pixel after updating the pixel value of the image pixel D0 to be updated; if the position corresponding to the image pixel D0 to be updated in the first color initial image is the first color image pixel, performing interpolation processing on the second color initial image based on the first color initial image, and obtaining the updated target pixel value of the second color pixel D1 of the image pixel D0 to be updated; and if the position corresponding to the image pixel D0 to be updated in the initial image of the third color is the third color image pixel, performing interpolation processing on the second color initial image based on the third color initial image, and obtaining the updated target pixel value D1 of the second color pixel of the image pixel D0 to be updated.

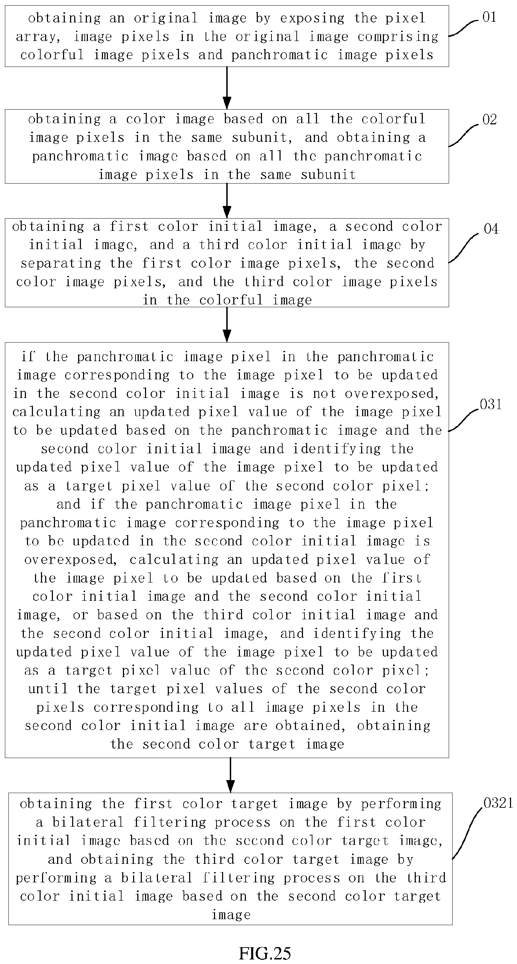

Please refer to FIG.2 and FIG.25, in some embodiments, the processor 20 is further configured to obtain the first color target image by performing a bilateral filtering process on the first color initial image based on the second color target image, and obtaining the third color target image by performing a bilateral filtering process on the third color initial image based on the second color target image.

Please refer to FIG.2 and FIG.28, in some embodiments, the processor 20 is further configured to obtain a processed colorful image by performing colorful image processing on the colorful image, obtain a processed panchromatic image by performing panchromatic image processing on the panchromatic image; and obtain a first color target image, a second color target image and a third color target image by processing the processed colorful image based on the processed panchromatic image.

Please refer to FIG.2 and FIG.29, in some embodiments, the processor 20 is further configured to obtain a color converted target image by performing color conversion based on the first color target image, the second color target image and the third color target image.

Please refer to FIG.30, the present disclosure further provides an electronic device 1000. The electronic device 1000 in the embodiments of the present disclosure comprises a lens 300, a housing 200; and the system 100 for image processing of any embodiments described above, the lens 300 and the system 100 for image processing are couple to the housing 200, the lens 300 and the image sensor 10 of the system 100 for image processing are configured to form an image by cooperation.

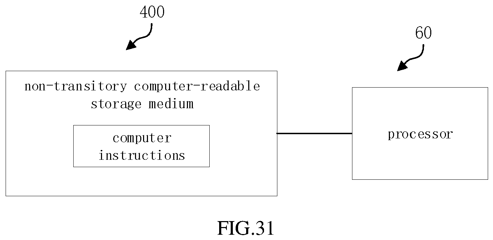

Please refer to FIG.31, the present disclosure further provides a non-transitory computer-readable storage medium 400 containing computer instructions, when the computer instructions are executed by a processor 60, the processor 60 executes the method for image processing described in any one of the embodiments above.

In the method for image processing and system 100 for image processing in the embodiment of the present disclosure, all colorful image pixels in the same subunit are fused into a colorful image arranged in a Bayer array; all panchromatic image pixels W in the same subunit are fused into panchromatic image, and directly use the panchromatic image and the color image to fuse, and can directly output the first color target image, the second color target image and the third color target image that contain panchromatic image information and are fully arranged. In this way, the resolution and signal-to-noise ratio of the image can be improved, and the overall photo effect can be improved.

FIG.3 illustrates a schematic diagram of an image sensor 10 in an embodiment of the present disclosure. The image sensor 10 comprises a pixel array 11, a vertical driving unit 12, a control unit 13, a column processing unit 14 and a horizontal driving unit 15.

For example, the image sensor 10 may use a complementary metal oxide semiconductor (CMOS, Complementary Metal Oxide Semiconductor) photosensitive element or a charge-coupled device (CCD, Charge-coupled Device) photosensitive element.

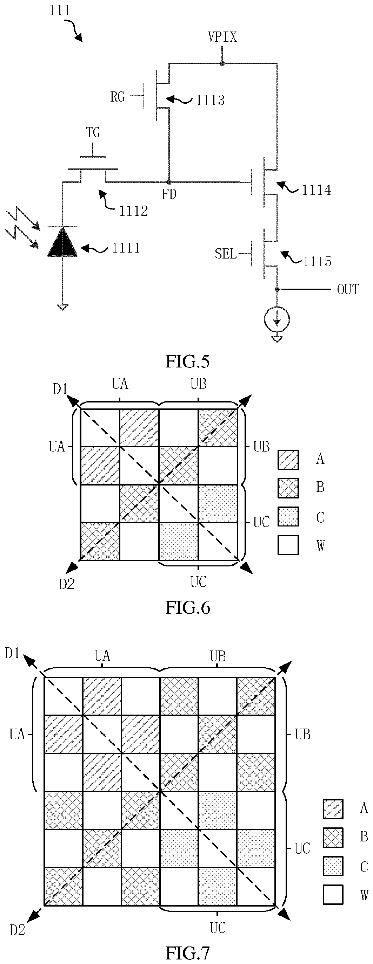

For example, the pixel array 11 comprises a plurality of photosensitive pixels 110 (shown in FIG.4) arranged two-dimensionally in an array (that is, arranged in a two-dimensional matrix), and each photosensitive pixel 110 includes a photoelectric conversion element 1111 (shown in FIG.5). Each photosensitive pixel 110 converts light into charges according to the intensity of light incident thereon.

For example, the vertical driving unit 12 comprises a shift register and an address decoder. The vertical drive unit 12 comprises readout scanning and reset scanning functions. The readout scan refers to sequentially scanning the unit photosensitive pixels 110 row by row, and reading signals from these unit photosensitive pixels 110 row by row. For example, the signal output by each photosensitive pixel 110 in the selected and scanned photosensitive pixel row is transmitted to the column processing unit 14. The reset scan is for resetting the charge, and the photo charge of the photoelectric conversion element is discarded so that accumulation of new photo charge can be started.

For example, the signal processing performed by the column processing unit 14 is correlated double sampling (CDS) processing. In the CDS process, the reset level and signal level output from each photosensitive pixel 110 in the selected photosensitive pixel row are taken out, and the level difference is calculated. Thus, signals of photosensitive pixels 110 in one row are obtained. The column processing unit 14 may have an analog-to-digital (A/D) conversion function for converting analog pixel signals into digital format.

For example, the horizontal driving unit 15 comprises a shift register and an address decoder. The horizontal driving unit 15 sequentially scans the pixel array 11 column by column. Through the selection scanning operation performed by the horizontal driving unit 15, each photosensitive pixel column is sequentially processed by the column processing unit 14, and is sequentially output.

For example, the control unit 13 configures timing signals according to the operation mode, and uses various timing signals to control the vertical driving unit 12, the column processing unit 14 and the horizontal driving unit 15 to work together.

FIG.4 is a schematic diagram of a photosensitive pixel 110 in an embodiment of the present disclosure. The photosensitive pixel 110 includes a pixel circuit 111, a filter 112, and a micro lens 113. Along the light-receiving direction of the photosensitive pixel 110, the micro lens 113, the filter 112, and the pixel circuit 111 are arranged in sequence. The micro lens 113 is used to gather light, and the filter 112 is used to allow light of a certain wavelength to pass through and filter out light of other wavelengths. The pixel circuit 111 is used to convert the received light into an electrical signal, and provide the generated electrical signal to the column processing unit 14 shown in FIG.3.

FIG.5 is a schematic diagram of a pixel circuit 111 of a photosensitive pixel 110 in an embodiment of the present disclosure. The pixel circuit 111 in FIG.5 can be applied in each photosensitive pixel 110 (shown in FIG.4) in the pixel array 11 shown in FIG.3. The working principle of the pixel circuit 111 will be described below with reference to FIG.3 to FIG.5.

As illustrated in FIG.5, the pixel circuit 111 includes a photoelectric conversion element 1111 (for example, a photodiode), an exposure control circuit (for example, a transfer transistor 1112), a reset circuit (for example, a reset transistor 1113), an amplification circuit (for example, an amplification transistor 1114) and selection circuitry (eg, selection transistor 1115). In the embodiment of the present disclosure, the transfer transistor 1112, the reset transistor 1113, the amplifying transistor 1114 and the selection transistor 1115 are, for example, MOS transistors, but are not limited thereto.

For example, the photoelectric conversion element 1111 includes a photodiode, and the anode of the photodiode is connected to the ground, for example. Photodiodes convert received light into electric charges. The cathode of the photodiode is connected to the floating diffusion unit FD via an exposure control circuit (eg, transfer transistor 1112). The floating diffusion unit FD is connected to the gate of the amplification transistor 1114 and the source of the reset transistor 1113.

For example, the exposure control circuit is the transfer transistor 1112, and the control terminal TG of the exposure control circuit is the gate of the transfer transistor 1112. When a pulse of an active level (for example, VPIX level) is transmitted to the gate of the transfer transistor 1112 through the exposure control line, the transfer transistor 1112 is turned on. The transfer transistor 1112 transfers the photoelectrically converted charge of the photodiode to the floating diffusion unit FD.

For example, the drain of the reset transistor 1113 is connected to the pixel power supply VPIX. The source of the reset transistor 113 is connected to the floating diffusion unit FD. Before the charge is transferred from the photodiode to the floating diffusion unit FD, a pulse of effective reset level is transmitted to the gate of the reset transistor 113 via the reset line, and the reset transistor 113 is turned on. The reset transistor 113 resets the floating diffusion unit FD to the pixel power supply VPIX.

For example, the gate of the amplification transistor 1114 is connected to the floating diffusion unit FD. The drain of the amplification transistor 1114 is connected to the pixel power supply VPIX. After the floating diffusion unit FD is reset by the reset transistor 1113, the amplification transistor 1114 outputs a reset level through the output terminal OUT via the selection transistor 1115. After the charge of the photodiode is transferred by the transfer transistor 1112, the amplification transistor 1114 outputs a signal level through the output terminal OUT via the selection transistor 1115.

For example, the drain of the selection transistor 1115 is connected to the source of the amplification transistor 1114. The source of the selection transistor 1115 is connected to the column processing unit 14 in FIG.3 through the output terminal OUT. When a pulse of an active level is transmitted to the gate of the selection transistor 1115 through the selection line, the selection transistor 1115 is turned on. The signal output by the amplification transistor 1114 is transmitted to the column processing unit 14 through the selection transistor 1115.

It should be noted that the pixel structure of the pixel circuit 111 in the embodiment of the present disclosure is not limited to the structure shown in FIG.5. For example, the pixel circuit 111 may also have a three-transistor pixel structure, wherein the functions of the amplification transistor 1114 and the selection transistor 1115 are performed by one transistor. For example, the exposure control circuit is not limited to the way of a single transfer transistor 1112, other electronic devices or structures that have the function of controlling the conduction of the control terminal can be used as the exposure control circuit in the embodiment of the present disclosure, and the implementation of the single transfer transistor 1112 in the embodiments of the present disclosure is simple, low cost, and easy to control.

FIG.6 to FIG.8 are schematic diagrams of the arrangement of the light-sensitive pixels 110 (shown in FIG.4) in the pixel array 11 (shown in FIG.3) in some embodiments of the present disclosure. The light-sensing pixels 110 comprise two types, one is panchromatic photosensitive pixels W, and the other is colorful photosensitive pixels. The pixel array 11 can be formed by duplicating the minimum repeating unit shown in FIGS.6 to FIG.8 multiple times on rows and columns. Each minimum repeating unit is composed of a plurality of panchromatic photosensitive pixels W and a plurality of color photosensitive pixels. Each minimal repeating unit includes multiple subunits. Each subunit includes a plurality of single-color photosensitive pixels and a plurality of panchromatic photosensitive pixels W.

Specifically, for example, FIG. 6 is a schematic diagram of arrangement of photosensitive pixels 110 (shown in FIG.4) in the smallest repeating unit according to an embodiment of the present disclosure. Wherein, the minimum repeating unit is 16 photosensitive pixels 110 in 4 rows and 4 columns, and the sub-unit is 4 photosensitive pixels 110 in 2 rows and 2 columns. The arrangement is as follows:

| W | A | W | B |
|---|---|---|---|
| A | W | B | W |
| W | B | W | C |
| B | W | C | W |

W represents a panchromatic photosensitive pixel; A represents a first color photosensitive pixel among a plurality of colorful photosensitive pixels; B represents a second color photosensitive pixel among a plurality of colorful photosensitive pixels; C represents a third color photosensitive pixel among a plurality of colorful photosensitive pixels.

For example, as shown in FIG.6, for each subunit, panchromatic photosensitive pixels W and single-color photosensitive pixels are arranged alternately.

For example, as shown in FIG.6, the categories of subunits comprise three categories. Wherein, the first type of subunit UA comprises a plurality of panchromatic photosensitive pixels W and a plurality of first color photosensitive pixels A; the second type of subunit UB comprises a plurality of panchromatic photosensitive pixels W and a plurality of second color photosensitive pixels B; the third type of sub-unit UC comprises a plurality of panchromatic photosensitive pixels W and a plurality of third color photosensitive pixels C. Each minimum repeating unit comprises four subunits, which are respectively a first-type subunit UA, two second-type subunits UB and a third-type subunit UC. Among them, a first-type subunit UA and a third-type subunit UC are arranged in the first diagonal direction D1 (such as the direction connecting the upper left corner and the lower right corner in Figure 6), and two second-type subunits UB are arranged in the second diagonal direction D2 (for example, the direction connecting the upper right corner and the lower left corner in FIG.6). The first diagonal direction D1 is different from the second diagonal direction D2. For example, the first diagonal and the second diagonal are perpendicular.

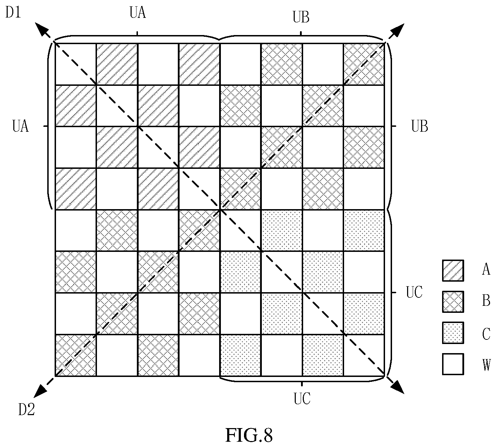

It should be noted that, in other embodiments, the first diagonal direction D1 may also be the direction connecting the upper right corner and the lower left corner, and the second diagonal direction D2 may also be the direction connecting the upper left corner and the lower right corner. In addition, the "direction" here is not a single point, but can be understood as the concept of "straight line" indicating the arrangement, and there can be two-way pointing at both ends of the line. The explanation of the first diagonal direction D1 and the second diagonal direction D2 in FIG.7 and FIG.8 below is the same as here.

For another example, FIG.7 is a schematic diagram of the arrangement of photosensitive pixels 110 (shown in FIG.4) in the smallest repeating unit of another embodiment of the present disclosure. Wherein, the minimum repeating unit is 36 photosensitive pixels 110 in 6 rows and 6 columns, and the sub-unit is 9 photosensitive pixels 110 in 3 rows and 3 columns. The arrangement is as follows:

```
W   A   W   B   W   B
A   W   A   W   B   W
W   A   W   B   W   B
B   W   B   W   C   W
W   B   W   C   W   C
B   W   B   W   C   W
```

W represents a panchromatic photosensitive pixel; A represents a first color photosensitive pixel among a plurality of colorful photosensitive pixels; B represents a second color photosensitive pixel among a plurality of colorful photosensitive pixels; C represents a third color photosensitive pixel among a plurality of colorful photosensitive pixels.

For example, as shown in FIG.7, for each subunit, panchromatic photosensitive pixels W and single-color photosensitive pixels are arranged alternately.

For example, as shown in FIG.7, the categories of subunits include three categories. Wherein, the first type of subunit UA comprises a plurality of panchromatic photosensitive pixels W and a plurality of first color photosensitive pixels A; the second type of subunit UB comprises a plurality of panchromatic photosensitive pixels W and a plurality of second color photosensitive pixels B; The third type of sub-unit UC includes a plurality of panchromatic photosensitive pixels W and a plurality of third color photosensitive pixels C. Each minimum repeating unit comprises four subunits, which are respectively a first-type subunit UA, two second-type subunits UB and a third-type subunit UC. Wherein, one first-type subunit UA and one third-type subunit UC are arranged in the first diagonal direction D1, and two second-type subunits UB are arranged in the second diagonal direction D2. The first diagonal direction D1 is different from the second diagonal direction D2. For example, the first diagonal and the second diagonal are perpendicular.

For another example, FIG.8 is a schematic diagram of the arrangement of photosensitive pixels 110 (shown in FIG.4) in the smallest repeating unit of another embodiment of the present disclosure. Wherein, the minimum repeating unit is 64 photosensitive pixels 110 in 8 rows and 8 columns, and the sub-unit is 16 photosensitive pixels 110 in 4 rows and 4 columns. The arrangement is as follows:

```
W   A   W   A   W   B   W   B
A   W   A   W   B   W   B   W
W   A   W   A   W   B   W   B
A   W   A   W   B   W   B   W
W   B   W   B   W   C   W   C
B   W   B   W   C   W   C   W
W   B   W   B   W   C   W   C
```

(continued)

B     W     B     W     C     W     C     W

W represents a panchromatic photosensitive pixel; A represents a first color photosensitive pixel among a plurality of colorful photosensitive pixels; B represents a second color photosensitive pixel among a plurality of colorful photosensitive pixels; C represents a third color photosensitive pixel among a plurality of colorful photosensitive pixels.

For example, as shown in FIG.8, for each subunit, panchromatic photosensitive pixels W and single-color photosensitive pixels are arranged alternately.

For example, as shown in FIG.8, the categories of subunits comprise three categories. Wherein, the first type of subunit UA comprises a plurality of panchromatic photosensitive pixels W and a plurality of first color photosensitive pixels A; the second type of subunit UB comprises a plurality of panchromatic photosensitive pixels W and a plurality of second color photosensitive pixels B; The third type of sub-unit UC comprises a plurality of panchromatic photosensitive pixels W and a plurality of third color photosensitive pixels C. Each minimum repeating unit comprises four subunits, which are respectively a first-type subunit UA, two second-type subunits UB and a third-type subunit UC. Wherein, one first-type subunit UA and one third-type subunit UC are arranged in the first diagonal direction D1, and two second-type subunits UB are arranged in the second diagonal direction D2. The first diagonal direction D1 is different from the second diagonal direction D2. For example, the first diagonal and the second diagonal are perpendicular.

For example, in the minimum repeating unit shown in FIG.6 to FIG.8, the photosensitive pixel A of the first color can be a photosensitive pixel R of red; the second color photosensitive pixel B may be a green photosensitive pixel G; the third color photosensitive pixel C may be a blue photosensitive pixel Bu.

For example, in the minimum repeating unit shown in FIG.6 to FIG.8, the photosensitive pixel A of the first color can be a photosensitive pixel R of red; the second color photosensitive pixel B may be a yellow photosensitive pixel Y; the third color photosensitive pixel C may be a blue photosensitive pixel Bu.

For example, in the minimum repeating unit shown in FIG.6 to FIG.8, the photosensitive pixel A of the first color can be a photosensitive pixel M of magenta; The photosensitive pixel B of the second color may be a photosensitive pixel Cy of cyan; the photosensitive pixel C of the third color may be a photosensitive pixel Y of yellow.

It should be noted that, in some embodiments, the response wavelength band of the panchromatic photosensitive pixel W may be a visible light band (for example, 400nm-760nm). For example, an infrared filter is arranged on the panchromatic photosensitive pixel W to filter out infrared light. In some other embodiments, the response bands of the panchromatic photosensitive pixels W are visible light bands and near-infrared bands (for example, 400nm-1000nm), and the photoelectric conversion elements 1111 (shown in FIG.5) in the image sensor 10 (shown in FIG.3) shown) to match the response band. For example, the panchromatic photosensitive pixel W may not be equipped with a filter or may be provided with a filter that allows light of all wavelengths to pass through, and the response band of the panchromatic photosensitive pixel W is determined by the response band of the photoelectric conversion element 1111, that is, the two matches. Embodiments of the present disclosure comprise but are not limited to the above-mentioned band ranges.

For the convenience of description, the following embodiments assume that the photosensitive pixels of the first color are red photosensitive pixels R; the photosensitive pixels B of the second color are green photosensitive pixels G; and the photosensitive pixels C of the third color are blue photosensitive pixels Bu.

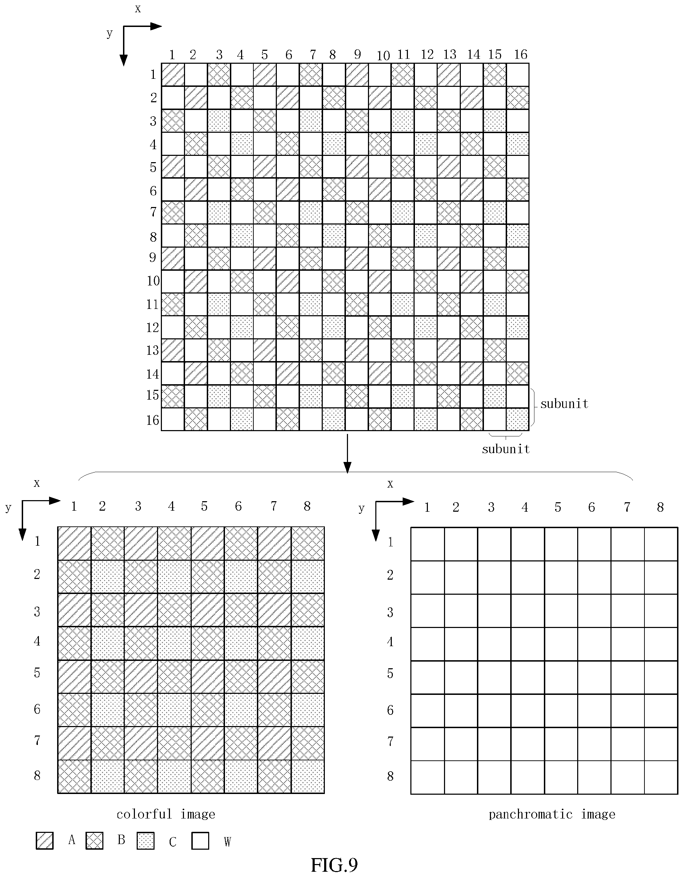

Please refer to FIG.9, in some embodiments, the processor 20 obtains and exposes the pixel array 11 to obtain an original image, and the original image comprises color image pixels and panchromatic image pixels W. In some embodiments, the processor 20 obtains a color image based on all the color image pixels in the same subunit, and obtains a panchromatic image based on all the panchromatic image pixels in the same subunit.

For example, please refer to FIG.9, assuming that the original image generated after the exposure of the pixel array 11 (shown in FIG.3) includes 16*16 image pixels, in which the colorful image pixel P1 (1,1), the colorful image pixel P1 (2, 2), panchromatic image pixel P1 (1,2) and panchromatic image pixel P1 (2,1) form a subunit U1; colorful image pixel P1 (1,3), colorful image pixel P1 (2,4), panchromatic image pixel P1 (1, 4) and panchromatic image pixel P1 (2, 3) constitute subunit U2; colorful image pixel P1 (1, 5), colorful image pixel P1 (2, 6), panchromatic image pixel P1 (1,6) and panchromatic image pixel P1 (2,5) constitute subunit U3; colorful image pixel P1 (1,7), colorful image pixel P1 (2,8), panchromatic image pixel P1 (1,8) and panchromatic image pixel P1 (2,7) constitute subunit U4, colorful image pixel P1 (1,9), colorful image pixel P1 (2,10), panchromatic image pixel P1 (1,10) and panchromatic image pixel P1 (2,11) constitutes subunit U5; colorful image pixel P1 (1,11), colorful image pixel P1 (2,12), panchromatic image pixel P1 (1,12) and panchromatic image pixel P1 ( 2,11) constitute subunit U6; colorful image pixel P1 (1,13), colorful image pixel P1 (2,14), panchromatic image pixel P1 (1,14) and panchromatic image pixel P1 (2,13) constitute subunit U7; colorful image pixel P1 (1,15), colorful image pixel P1 (2,16), panchromatic image pixel P1 (1,16) and panchromatic image pixel P1 (2,15) constitute subunit U8 , subunit U1, subunit U2, subunit U3, subunit U4, subunit U5, subunit U6, subunit U7, and subunit U8 are located in the same row.

The processor 20 takes the average value of the pixel values of the colorful image pixel P1 (1,1) and the color image pixel P1 (2,2) in the subunit U1 as the pixel value of the fused colorful image pixel P2 (1,1), The fused colorful image pixel P2 (1,1) is located in the first row and first column of the color image; then, the processor 20 combines the colorful image pixel P1 (1,3) and the colorful image pixel P1 ( 2, 4) as the pixel value of the fused colorful image pixel P2 (1, 2), and the fused colorful image pixel P2 (1, 2) is located in the first row and second column of the colorful image; subsequently, the processor 20 takes the average value of the pixel values of the colorful image pixel P1 (1, 5) and the colorful image pixel P1 (2, 6) in the subunit U3 as the pixel of the fused colorful image pixel P2 (1, 3) value, the fused colorful image pixel P2 (1, 3) is located in the first row and third column of the colorful image; then, the processor 20 converts the colorful image pixel P1 (1, 7) and the colorful image pixel in the subunit U4. The mean value of the pixel value of P1 (2,8) is used as the pixel value of the fused colorful image pixel P2 (1,4), and the fused colorful image pixel P2 (1,4) is located in the first row and fourth row of the colorful image row; then, the processor 20 uses the mean value of the pixel values of the colorful image pixel P1 (1,9) and the colorful image pixel P1 (2,10) in the subunit U5 as the fused colorful image pixel P2 (1,5). The pixel value of the fused colorful image pixel P2 (1, 5) is located in the first row and fifth column of the colorful image; then, the processor 20 converts the colorful image pixel P1 (1, 11) and the colorful image pixel P1 (1, 11) in the subunit U6. The mean value of the pixel values of the image pixel P1 (2,12) is used as the pixel value of the fused colorful image pixel P2 (1,6), which is located in the first row of the colorful image Column 6; subsequently, the processor 20 uses the mean value of the pixel values of the colorful image pixel P1 (1, 13) and the colorful image pixel P1 (2, 14) in the subunit U7 as the fused colorful image pixel P2 (1, 14) 7), the fused colorful image pixel P2 (1, 7) is located in the first row and 7th column of the colorful image; then, the processor 20 converts the colorful image pixel P1 (1, 15) in the subunit U8. The average value of the pixel values of the colorful image pixel P1 (2, 16) is used as the pixel value of the fused colorful image pixel P2 (1, 8), and the fused colorful image pixel P2 (1, 8) is located in the first colorful image 1 row, 8th column. So far, the processor 20 has fused the colorful image pixels of the multiple sub-units in the first row in the original image. Subsequently, the processor 20 fuses the multiple colorful image pixels corresponding to the multiple subunits in the second row to obtain corresponding fused colorful image pixels, and then fuses the multiple colorful image pixels corresponding to the multiple subunits in the second row. The specific method of obtaining the corresponding fused colorful image pixels is the same as the specific method of merging the multiple colorful image pixels corresponding to the multiple subunits in the first row to obtain the corresponding fused colorful image pixels, and will not be repeated here. By analogy, until the processor 20 has fused the colorful image pixels of the multiple sub-units in the eighth row in the original image. In this way, all the colorful image pixels in the same subunit are fused to obtain a fused colorful image pixel, and a plurality of fused colorful image pixels are arranged to form a colorful image. The color image pixels in a colorful image are arranged in a Bayer array. Of course, the processor 20 may also average the colorful image pixels in multiple subunits at the same time to obtain multiple fused colorful image pixels, and then arrange the multiple fused colorful image pixels to generate a colorful image, which is not limited here.

Since the fused colorful image pixels in the colorful image are obtained by averaging all the colorful image pixels in the same subunit in the original image, that is, the mean value of all the colorful image pixels in the same subunit in the original image is used as the colorful image in the fused color image pixels, in this way, the obtained colorful image has a larger dynamic range than the original image, so that the dynamic range of the colorful image obtained after the colorful image is used for subsequent processing can be expanded.

Similarly, referring to FIG.9, the processor 20 obtains a panchromatic image based on all the panchromatic image pixels in the same subunit. The specific implementation manner in which the processor 20 obtains a panchromatic image based on all the panchromatic image pixels in the same subunit is the same as the specific implementation manner in which the processor 20 obtains a colorful image based on all the colorful image pixels in the same subunit, and will not be repeatedly described here.

Please refer to FIG. 10, in some embodiments, the method for image processing further comprises:
04: the first color image pixel A, the second color image pixel B, and the third color image pixel C in the colorful image are separated to obtain a first color initial image, a second color initial image, and a third color initial image.

Please refer to FIG.2 and FIG. 10, step 04 may be implemented by the processor 20. That is to say, the processor 20 is also used to separate the first color image pixel A, the second color image pixel B, and the third color image pixel C in the colorful image to obtain the first color initial image, the second color initial image and the third color initial image.

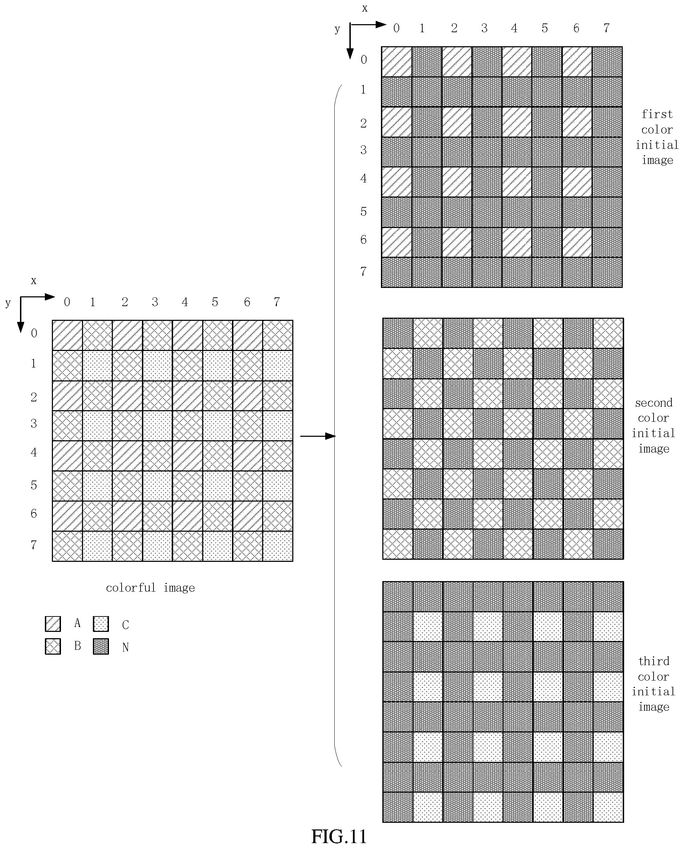

Specifically, referring to FIG. 11, after the processor 20 obtains the colorful image, the processor 20 separates the first color image pixel A, the second color image pixel B, and the third color image pixel C in the colorful image, obtain the first color initial image, the second color initial image and the third color initial image. Wherein, the image pixels in the first color initial image include the first color image pixel A and the null pixel N; the image pixels in the second color initial image include the second color image pixel B and the null pixel N; the image pixels in the third color initial image include image pixels C and the null pixels N.

The following takes the acquisition of the first color initial image as an example. After the processor 20 obtains the color image, the processor 20 extracts the first color image pixel A in the colorful image and sets the extracted first color image pixel A at corresponding position of the initial image of a color. For example, the processor 20 extracts the first color image pixel A to be located in the first row and the first column of the color image, then the processor 20 sets the first color image pixel A in the first row and the first column of the first color initial image, Then the processor 20 extracts the next first color image pixel A in the colorful image, and repeats the above steps until all the first color image pixels A in the colorful image are extracted once. The processor 20 then places a null pixel N at the position where the pixel A of the first color image is not set in the first color initial image. It should be noted that the null pixel N (NULL) is neither a panchromatic pixel nor a colorful pixel, and the position of the null pixel N in the first color initial image can be regarded as having no pixel at this position, or the pixel value of the null pixel N can be treated as zero. The specific implementation manner for the processor 20 to obtain the second color initial image and the third color initial image is the same as the specific implementation manner of obtaining the first color initial image, and will not be described one by one.

After the processor 20 obtains the first color initial image, the second color initial image and the third color initial image, please refer to FIG.1 and FIG. 10, step 03: the obtaining a first color target image, a second color target image and a third color target image by processing the colorful image based on the panchromatic image comprising:

031: if the panchromatic image pixel in the panchromatic image W0 corresponding to the image pixel D0 to be updated in the second color initial image is not overexposed, calculating an updated pixel value of the image pixel D0 to be updated based on the panchromatic image and the second color initial image and identifying the updated pixel value of the image pixel to be updated as a target pixel value of the second color pixel; and if the panchromatic image pixel in the panchromatic image W0 corresponding to the image pixel D0 to be updated in the second color initial image is overexposed, calculating an updated pixel value of the image pixel to be updated based on the first color initial image and the second color initial image, or based on the third color initial image and the second color initial image, and identifying the updated pixel value of the image pixel to be updated as a target pixel value of the second color pixel; until the target pixel values of the second color pixels corresponding to all image pixels B in the second color initial image are obtained, obtaining the second color target image;

032: obtaining the first color target image by processing the second color target image and the first color initial image, and obtaining the third color target image by processing the second color target image and the third color initial image.

Please refer to FIG.2 and FIG.10, step 031 and step 032 are both implemented by the processor 20. That is to say, the processor 20 is also configured to: if the panchromatic image pixel W in the panchromatic image corresponding to the image pixel D0 to be updated in the second color initial image is not overexposed, then calculating an updated pixel value of the image pixel D0 to be updated based on the panchromatic image and the second color initial image and identifying the updated pixel value of the image pixel to be updated as a target pixel value of the second color pixel; and if the panchromatic image pixel in the panchromatic image corresponding to the image pixel to be updated in the second color initial image is overexposed, calculating an updated pixel value of the image pixel D0 to be updated based on the first color initial image and the second color initial image, or based on the initial image of the third color and the initial image of the second color, and use it as the target pixel of the second color pixel value; until the target pixel values of the second color pixels corresponding to all image pixels in the second color initial image are obtained, obtaining the second color target image; obtaining the first color target image by processing the second color target image and the first color initial image, and obtaining the third color target image by processing the second color target image and the third color initial image.

After the processor 20 obtains the first color initial image, the second color initial image, and the third color initial image, the processor 20 processes the second color initial image based on the panchromatic image or the first color initial image and the third color initial image. Each image pixel in the image is processed to obtain the target pixel value of the second color pixel corresponding to each image pixel, and the target pixel values of multiple second color pixels are arranged to form the second color target image.

In some embodiments, the processor 20 arbitrarily extracts any image pixel in the original image of the second color as the image pixel D0 to be updated, and the processor 20 first determines the image pixel to be updated in the panchromatic image and the original image of the second color Whether the panchromatic image pixel W0 corresponding to D0 is overexposed, if the corresponding panchromatic image pixel W0 is not overexposed, then process the initial image of the second color according to the panchromatic image to obtain the second color corresponding to the image pixel D0 to be updated Color pixel target pixel value; if the corresponding panchromatic image pixel W0 is overexposed, then process the second color initial image according to the first color initial image and the third color initial image to obtain the corresponding first image pixel D0 to be updated Two-color pixel target pixel value. Subsequently, the processor 20 extracts the next image pixel in the original image of the second color as the image pixel D0 to be updated for processing, and repeats the above steps until all the image pixels in the original image of the second color are processed. At this time, the processor 20 can obtain the target pixel value of the second color pixel corresponding to each image pixel in the second color initial image, and a plurality of second color pixel target pixel values are arranged to form the second color target image. Of course, the processor 20 can also extract the image pixels in the initial image of the second color in a certain order, for example, the processor 20 first extracts the first image pixel located in the upper left corner of the initial image of the second color for processing, and then extracts the next image pixels to be processed until the row of image pixels is processed, and then the image pixels of the next row of the second color initial image are processed, which is not limited here.

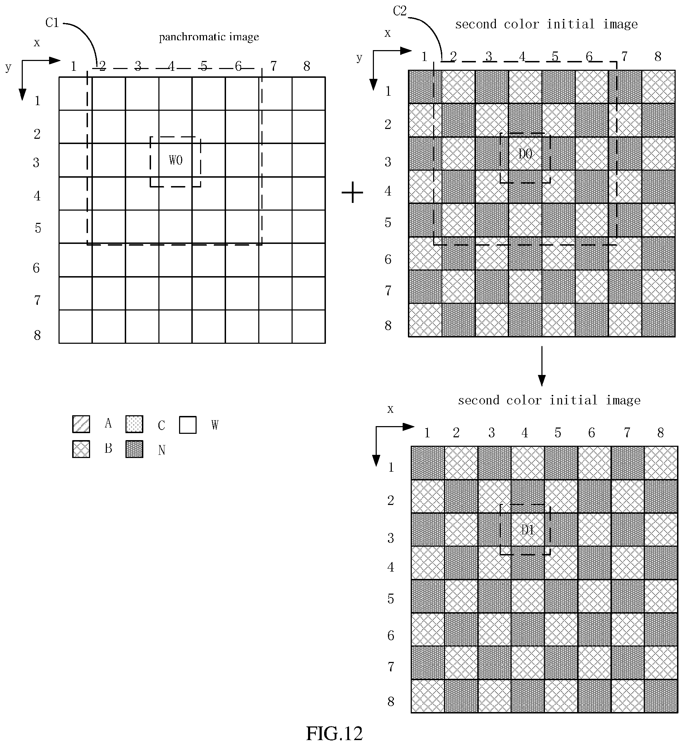

Specifically, the processor 20 first determines whether the panchromatic image pixel W0 corresponding to the image pixel D0 to be updated in the second color initial image is overexposed. For example, referring to FIG.12, the image pixel D0 to be updated is located in the third row and fourth column of the second color initial image, then it is judged whether the pixel value of the panchromatic pixel W0 located in the third row and fourth column of the panchromatic image is large preset value, if the pixel value of the panchromatic pixel W0 is greater than the preset value, it can be considered that the panchromatic pixel W0 is overexposed; if the pixel value of the panchromatic pixel W0 is smaller than the preset value, it can be considered that the panchromatic pixel W0 is not overexposed, if the pixel value of the panchromatic pixel W0 is equal to the preset value, it can be considered that the panchromatic pixel W0 is overexposed or that the panchromatic pixel W0 is not overexposed. Of course, in other embodiments, it is also possible to use other methods to determine whether the panchromatic image pixel W0 corresponding to the image pixel D0 to be updated in the second-color initial image is overexposed, which will not be exemplified here.

If the panchromatic image pixel W0 corresponding to the image pixel D0 to be updated in the second color initial image in the panchromatic image is not overexposed, then calculate the updated image pixel D0 according to the panchromatic image and the pixel value of the second color initial image and as the target pixel value of the second color pixel. For example, please refer to FIG. 10 and FIG. 13, in some embodiments, the image pixels in the second-color initial image include the second-color image pixel B and a null pixel N, and the pixel value of the null pixel N is zero. Calculate the updated pixel of the image pixel D0 to be updated according to the panchromatic image and the initial image of the second color as the target pixel value of the second color pixel, comprising:

0311: selecting a first window C1 centered on the image pixel D0 to be updated in the second color initial image, and selecting a second window C2 corresponding to the first window C1 in the panchromatic image, the panchromatic image pixels W0 at the center of the second window C2 correspond to the image pixel D0 to be updated and identified as a mapped panchromatic image pixel W0;

0312: obtaining a first matrix I1 based on pixel information of all image pixels in the first window C1;

0313: obtaining a second matrix I2 based on the pixel values of the mapped panchromatic image pixels W0, the pixel values of all panchromatic image pixels W in the second window C2, the first matrix I1, and a preset weight function F(x); and

0314: obtaining the updated target pixel value of the second color pixel of the image pixel D0 to be updated based on the pixel values of the mapped panchromatic image pixels W0, the pixel values of all image pixels in the first window C1, the pixel values of all panchromatic image pixels W in the second window C2, and the second matrix I2.

Please refer to FIG.2, FIG. 10 and FIG. 13, step 0311, step 0312, step 0313 and step 0314 can all be implemented by the processor 20. That is to say, the processor 20 is also configured to select the first window C1 centered on the image pixel D0 to be updated in the second color initial image, and select the second window C2 corresponding to the first window C1 in the panchromatic image, the panchromatic image pixel W0 at the center of the second window C2 corresponds to the image pixel D0 to be updated and is defined as the mapped panchromatic image pixel W0; obtain the first matrix according to the pixel information of all image pixels in the first window C1 and according to the pixel value of the mapped panchromatic image pixel W0, the pixel values of all image pixels in the first window C1, the pixel values of all panchromatic image pixels W in the second window C2, and the second matrix I2, obtain the image pixel to be updated D0 is the updated target pixel value of the second color pixel.

Please refer to FIG. 12, if the panchromatic image pixel W0 corresponding to the image pixel D0 to be updated in the second color initial image in the panchromatic image is not overexposed, the processor 20 selects an image to be updated in the second color initial image pixel D0 as the center of the first window C1, and select the second window C2 corresponding to the first window C1 in the panchromatic image, the panchromatic image pixel W at the center of the second window C2 corresponds to the image pixel D0 to be updated and defined as the mapped panchromatic image pixel W0. For example, the image pixel D0 to be updated is located in the third row and the fourth column in the second color initial image, then the panchromatic image pixel W corresponding to the image pixel D0 to be updated is located in the third row and the fourth column of the panchromatic image, the mapped panchromatic image pixel W0 is located in the third row and fourth column of the panchromatic image, and the image pixel D0 to be updated is located in the center of the first window C1, and the mapped panchromatic image pixel W0 is located in the center of the second window C2 Location.

It should be noted that the first window C1 and the second window C2 are virtual computing windows, not actual structures; and the sizes of the first window C1 and the second window C2 can be changed arbitrarily according to actual needs, in some embodiments , the image pixels in the first window C1 and the second window C2 are arranged in M*M, M is an odd number, for example, M can be 3, 5, 7, 9, etc., the corresponding first window C1 and the second window C2 It can be 3*3, 5*5, 7*7 or 9*9, etc., and there is no limitation here. For the convenience of description, the following embodiments are described with the first window C1 and the second window C2 both having a size of 5*5.

In some embodiments, if the image pixel D0 to be updated is located at the edge of the initial image of the second color, that is, when the first window C1 is set with the image pixel D0 to be updated as the center, the first window C1 will be partially set outside the second color initial image. At this time, image pixels in the initial image of the second color may be set in the first window C1 centered on the image pixel D0 to be updated by copying the image boundary pixels. For example, as shown in FIG. 14, the image pixel D0 to be updated is located in the third row and the second column of the initial image of the second color. At this time, if the first window C1 is set around the image pixel D0 to be updated, the first window C1 will be partially set outside the second color initial image. By copying the image boundary pixels, that is, copying the image pixels in the first column of the image, the image pixels in the original image of the second color are set in the first window C1 centered on the image pixel D0 to be updated. Similarly, if the image pixel D0 to be updated is located at the edge of the initial image of the second color, that is, the mapped holographic image pixel W0 is also located at the edge of the panchromatic image, it is also necessary to copy the edge pixels and then set the second window The specific implementation of C2 is the same as the specific implementation of setting the first window C1 after copying the edge pixels of the initial image of the second color, and will not be repeated here.

After the processor 20 sets the first window C1 in the original image of the second color and the second window C2 in the panchromatic image, the processor 20 obtains the first matrix I1 according to the pixel information of all image pixels in the first window C1. Specifically, please refer to FIG. 13 and FIG. 15. In some embodiments, step 0312: obtaining a first matrix based on pixel information of all image pixels in the first window, comprising:

03121: mapping the array arrangement of the image pixels in the first window C1 to the array arrangement of the first matrix I1;

03122: identifying the value in the first matrix I1 corresponding to the null pixel in the first window C1 as a first value; and

03123: identifying the value of the position in the first matrix I1 corresponding to the second color image pixel B in the first window as a second value.

Please refer to FIG.2 and FIG. 15, step 03121, step 03122 and step 03123 can all be implemented by the processor 20. That is to say, the processor 20 is also used to map the array arrangement of the image pixels in the first window C1 to the array arrangement of the first matrix I1; The value of is recorded as the first value; and the value of the position corresponding to the second color image pixel B in the first window C1 in the first matrix I1 is recorded as the second value.

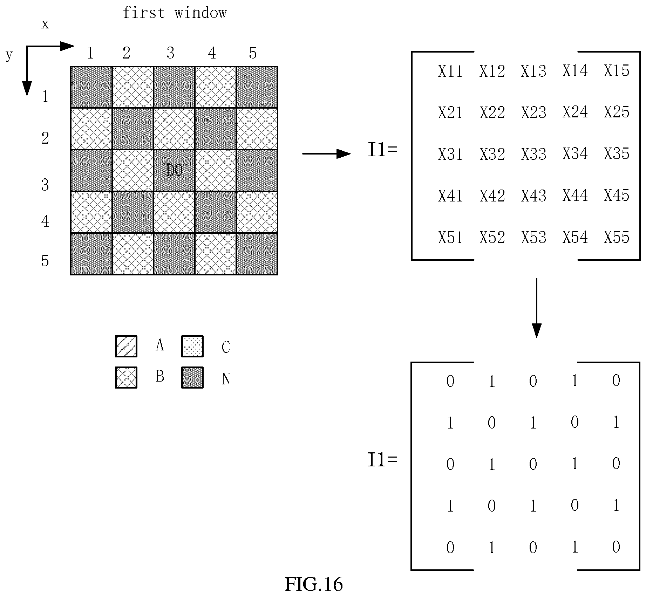

Please refer to FIG. 16, the processor 20 maps the array arrangement of the image pixels in the first window C1 to the array arrangement of the first matrix I1, that is, the number of rows of elements in the first matrix I1 is the same as that of the image pixels in the first window C1. The number of rows is the same, and the number of columns of elements in the first matrix I1 is the same as that of the image pixels in the first window C1, any image pixel in the first window C1 has an element corresponding to it in the first matrix I1. After obtaining the first matrix I1, the processor 20 records the value in the first matrix I1 corresponding to the null N in the first window C1 as the first value, and records the value in the first matrix I1 and the first window C1 in the first window C1 as the first value. The value of the position corresponding to the pixel B of the two-color image is recorded as the second value. In some embodiments, the first value is 0 and the second value is 1. That is to say, the processor 20 records the value of the position corresponding to the null N in the first matrix I1 and the first window C1 as 0, and records the value of the second color image pixel B in the first matrix I1 and the first window C1 as 0. The value of the corresponding position is recorded as 1. For example, if there are 5*5 image pixels in the first window C1, then the first matrix I1 is also a 5*5 matrix array. Among them, in the first matrix I1, the elements X11, X13, X15, X22, X24, X31, X33, X35, X42, X44, X51, X53, X55 are the positions corresponding to the null pixel N in the first window C1, and the element X12 , X14, X21, X23, X25, X32, X34, X41, X43, X45, X52, X54 are positions corresponding to the null pixel N in the first window C1; The values of X31, X33, X35, X42, X44, X51, X53, and X55 are all recorded as 0, and the values of X12, X14, X21, X23, X25, X32, X34, X41, X43, X45, X52, and X54 are recorded denoted as 1, so as to obtain the first matrix I1.

Please refer to FIG.13 and FIG.17, in some embodiments, step 0313: according to the pixel value of the mapped panchromatic image pixel W0, the pixel values of all panchromatic image pixels W in the second window C2, the first matrix I1 and the pre-set Let the weight function F(x) obtain the second matrix I2, including:

step 0313: obtaining a second matrix I2 based on the pixel values of the mapped panchromatic image pixels W0, the pixel values of all panchromatic image pixels W in the second window C2, the first matrix I1, and a preset weight function F(x), comprises:

03131: mapping the matrix arrangement of image pixels in the second window C2 to the array arrangement of the second matrix I2;

03132: obtaining the deviation value L1 corresponding to the position of the panchromatic image pixel W in the second matrix I2 based on the pixel value of each panchromatic image pixel W in the second window C2 and the mapped pixel value of the panchromatic image pixel W0;

03133: obtaining the value of the corresponding position in the second matrix I2 based on the deviation value L1, a preset function F(x) and the value of the same position in the first matrix I1.

Please refer to FIG.2 and FIG.17, step 03131, step 03132 and step 03133 can all be implemented by the processor 20. That is to say, the processor 20 is also configured to map the array arrangement of the image pixels in the second window C2 to the array arrangement of the second matrix I2; according to the pixel value of each panchromatic image pixel W in the second window C2 and the pixel value of the mapped panchromatic image pixel W0 to obtain the deviation value L1 of the position corresponding to the panchromatic image pixel W in the second matrix I2; and according to the deviation value L1, the preset function F(x) and the first matrix I1 For the value of the same position, the value of the corresponding position in the second matrix I2 is obtained.

After the processor 20 acquires the first matrix I1, the processor 20 maps the array arrangement of the image pixels in the second window C2 to the array arrangement of the second matrix I2. That is to say, the number of rows of elements in the second matrix I2 is the same as the number of rows of image pixels in the second window C2, and the number of columns of elements in the second matrix I2 is the same as the number of columns of image pixels in the second window C2, any image pixel in the second window C2 has an element corresponding to it in the second matrix I2.

The processor 20 obtains the deviation value L1 of the position corresponding to the panchromatic image pixel W in the second matrix I2 according to the pixel value of each panchromatic image pixel W in the second window C2 and the mapped pixel value of the panchromatic image pixel W0. Specifically, the deviation value L1 of the position corresponding to the panchromatic image pixel W in the second window C2 in the second matrix I2 is equal to the pixel value of the panchromatic image pixel W minus the pixel value of the mapped panchromatic image pixel W0. For example, the deviation value L1 (1,2) corresponding to row 1 and column 2 of the second matrix I2 is equal to the absolute value of the difference between the pixel values of panchromatic image pixels W (1,2) arranged in row 1 and column 2 of the panchromatic image and the pixel values of mapped panchromatic image pixels W0.

After the processor 20 obtains the deviation value L1 corresponding to all positions in the second matrix I2, the processor 20 obtains the value of the corresponding position in the second matrix I2 according to the deviation value L1, the default function F(x) and the value of the same position in the first matrix I1. Specifically, the deviation value L1 corresponding to the position to be calculated in the second matrix I2 is substituted into the default function F(x) to obtain the first result F(L1), and then the first result F(L1) is multiplied by the value of the same position in the first matrix I1 to obtain the value of the corresponding position in the second matrix I2. For example, please refer to FIG.18. Assuming that the value of position Y12 in row 1 and column 2 of the second matrix I2 is to be calculated, the deviation value L1(1,2) corresponding to the position in row 1 and column 2 of the second matrix I2 is first substituted into the default function F(x) for calculation to obtain the first result F(L1 (1,2)). Then obtain the value of the position corresponding to Y12 in the first matrix I1, that is, obtain the value of X12 located in the first matrix I1, row 1 and column 2. The value of position Y12 in row 1 and column 2 of the second matrix I2 is equal to the first result F(L1(1,2)) multiplied by the value of X12 in the first matrix I1. It should be noted that the default function F(x) can be an exponential function, a logarithmic function or a power function, only to meet the smaller the input value, the greater the weight of the output can be, there is no limitation here.

Please refer to FIG.13 and FIG.19, in some embodiments, step 0314: obtaining the updated target pixel value of the second color pixel of the image pixel to be updated based on the pixel values of the mapped panchromatic image pixels, the pixel values of all image pixels in the first window, the pixel values of all panchromatic image pixels in the second window, and the second matrix, comprises:

03141, calculating the first weighted value M1 based on the first window matrix N1 formed by the pixel values of all image pixels in the first window C1 and the second matrix I2, and calculating a second weighted value M2 based on a second window matrix N2 formed by pixel values of all image pixels in the second window C2 and the second matrix I2;

03142, obtaining the updated target pixel value of the second color pixel of the image pixel D0 to be updated based on the mapped pixel value of the panchromatic image pixel W0, the first weighted value M1, and the second weighted value M2.

Please refer to FIG.2 and FIG. 19, both step 03141 and step 03142 can be implemented by the processor 20. That is to say, the processor 20 is also used to calculate the first weighted value M1 according to the first window matrix N1 and the second matrix I2 formed by the pixel values of all image pixels in the first window C1, and to calculate the first weighted value M1 according to the pixel values of all image pixels in the second window C2. The second window matrix N2 and the second matrix I2 formed by the pixel values of the pixels calculate the second weighted value M2; the image pixel D0 is updated to the target pixel value of the second color pixel.

After the processor 20 obtains the second matrix I2, the processor forms the first window matrix N1 according to the pixel values of all the image pixels in the first window C1, and forms the second window matrix N2 according to the pixel values of all the panchromatic image pixels W in the second window C2. It should be noted that the value of any position in the first window matrix N1 is the same as the pixel value of the image pixel at the corresponding position in the first window C1, and the value of any position in the second window matrix N2 is the same as that of the pixel values of the image pixels at the corresponding positions in the second window C2.

The processor 20 calculates a first weight M1 according to the first window matrix N1 and the second matrix I2. For example, the first weighted value M1 can be obtained by calculating the formula $M1=sum(sum(H1 \times I2))$. That is to say, the pixel value of each image pixel in the first window C1 is multiplied by the value at the corresponding position in the second matrix I2 to obtain multiple new pixel values, and the multiple new pixels are added to obtain the first weighted value M1. The second weighted value M2 can be obtained by calculating the formula $M2=sum(sum(H2 \times I2))$. That is to say, the pixel value of each panchromatic image pixel W in the second window C1 is multiplied by the value at the corresponding position in the second matrix I2 to obtain multiple new pixel values, and the multiple new pixels are added to obtain the second weighted value M2.

After the processor 20 obtains the first weighted value M1 and the second weighted value M2, the processor 20 obtains the image to be updated according to the pixel value of the mapped panchromatic image pixel W0, the first weighted value M1, the second weighted value M2, and the updated target pixel value of the second color pixel of the pixel D0. For example, the target pixel value of the second color pixel can be calculated by the formula $B0'=W0' \times M1/M2$, wherein B0' is the target pixel value of the second color pixel, and W0' is the pixel value of the mapped panchromatic image pixel W0. That is to say, the pixel value of the mapped panchromatic image pixel W0 is multiplied by the first weighted value M1, and then divided by the second weighted value M2 to obtain the updated target pixel value of the second color pixel of the image pixel D0 to be updated.

If the panchromatic image pixel in the panchromatic image W0 corresponding to the image pixel D0 to be updated in the second color initial image is not overexposed, calculating an updated pixel value of the image pixel D0 to be updated based on the panchromatic image and the second color initial image and identifying the updated pixel value of the image pixel to be updated as a target pixel value of the second color pixel. For example, please refer to FIG. 10 and FIG.20, in some embodiments, the image pixel of the first color initial image comprises a first color image pixel A and a null pixel N, the image pixel of the third color initial image comprises a third color image pixel C and a null pixel N, the value of the null N is zero. Calculating an updated pixel value of the image pixel to be updated based on the first color initial image and the second color initial image, or based on the third color initial image and the second color initial image, and identifying the updated pixel value of the image pixel to be updated as a target pixel value of the second color pixel, comprises:

0315: if the image pixel D0 to be updated is the second color image pixel B, identifying the value of the original pixel of the second color image pixel B as the value of the target pixel of the second color pixel after updating the pixel value D1 of the image pixel D0 to be updated;

0316: if the position corresponding to the image pixel D0 to be updated in the first color initial image is the first color image pixel A, performing interpolation processing on the second color initial image based on the first color initial image, and obtaining the updated target pixel value D1 of the second color pixel of the image pixel D0 to be updated;

0317: if the position corresponding to the image pixel D0 to be updated in the initial image of the third color is the third color image pixel C, performing interpolation processing on the second color initial image based on the third color initial image, and obtaining the updated target pixel value D1 of the second color pixel of the image pixel D1 to be updated.

Please refer to FIG.2 and FIG.20, step 0315, step 0316 and step 0317 can all be implemented by the processor 20. That is to say, the processor 20 is also configured to use the original pixel value of the image pixel B of the second color as the updated second pixel value of the image pixel D0 to be updated if the image pixel D0 to be updated is an image pixel B of the second color. Color pixel target pixel value D1; if the position corresponding to the image pixel D0 to be updated in the first color initial image is the first color image pixel, then the second color initial image is interpolated according to the first color initial image to obtain the updated second color pixel target pixel value D1 of the image pixel D0 to be updated; and if the position corresponding to the image pixel D0 to be updated in the third color initial image is a third color image pixel, then according to the third color initial image, the interpolation processing is performed on the initial image of the second color to obtain the updated target pixel value D1 of the pixel D0 of the image to be updated.

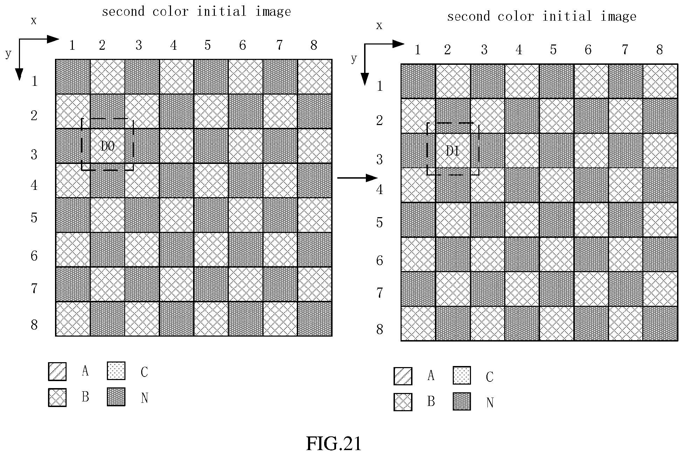

The processor 20 first determines whether the image pixel D0 to be updated is the image pixel B of the second color, and if the image pixel D0 to be updated is the image pixel B of the second color, then the original pixel value of the image pixel B of the second color is used as the image pixel B to be updated. The updated image pixel D0 is the updated target pixel value D1 of the second color pixel. For example, as shown in FIG.21, the image pixel D0 to be updated located in the third row and second column of the initial image of the second color is the second color image pixel B, then the updated second color image pixel D0 of the image pixel to be updated is B. The target pixel value D1 of the pixel is equal to the original pixel value of the pixel B of the second color image.

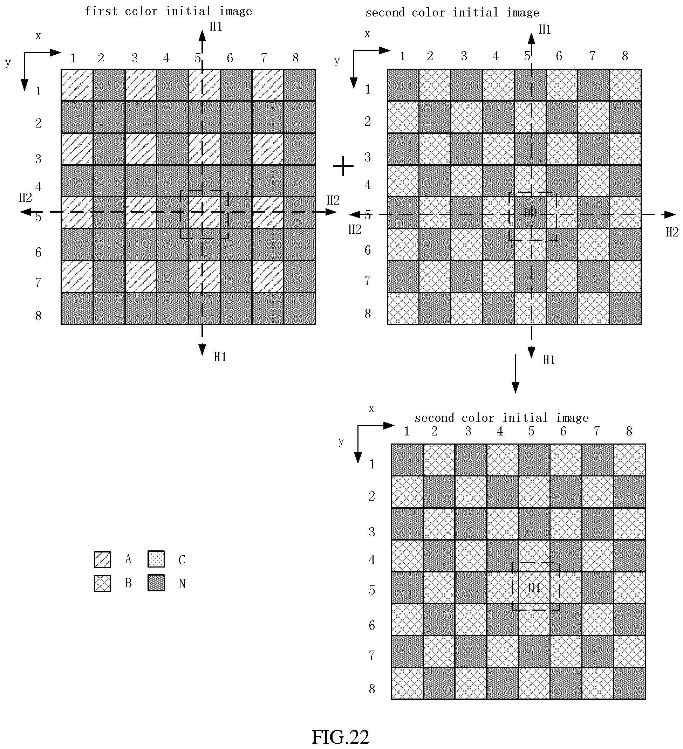

If the image pixel D0 to be updated is not the second color image pixel B, that is, the image pixel D0 to be updated is a null pixel N, determine whether the image pixel at the position corresponding to the image pixel D0 to be updated in the initial image of the first color is the image pixel A of the first color, if the image pixel corresponding to the image pixel D0 to be updated in the initial image of the first color is the image pixel A of the first color, then the initial image of the second color is performed according to the initial image of the first color by processing interpolation to obtain the updated target pixel value D1 of the second color pixel of the image pixel D0 to be updated. For example, as shown in FIG.22, the image pixel D0 to be updated located in the fifth row and fifth column of the initial image of the second color is a null pixel N, and the image pixel located in the fifth row and fifth column of the initial image of the first color is the image pixel A of the first color, the initial image of the second color is interpolated according to the initial image of the first color, so as to obtain the updated target pixel value D1 of the second color pixel of the image pixel D0 to be updated.

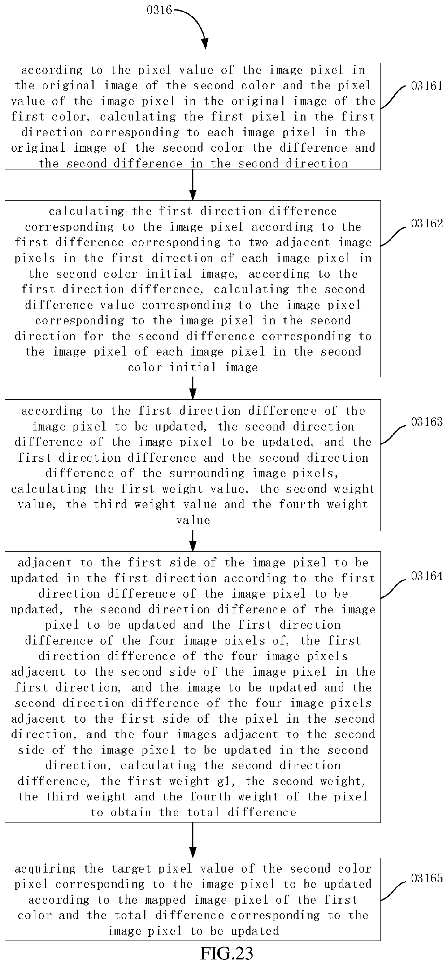

In some embodiments, the color difference constant theory can be used to utilize the updated target pixel value D1 of the second color pixel D0 of the image pixel D0 to be updated in the initial image of the first color. For example, please refer to FIG.20 and FIG.23, the first color image pixel A corresponding to the image pixel D0 to be updated in the first color initial image is defined as the mapped first color image pixel A0. The initial image of the second color is interpolated according to the initial image of the first color to obtain the updated target pixel value D1 of the second color pixel of the image pixel D0 to be updated, comprises:

03161: according to the pixel value of the image pixel in the original image of the second color and the pixel value of the image pixel in the original image of the first color, calculating the first pixel in the first direction H1 corresponding to each image pixel in the original image of the second color the difference E1 and the second difference E2 in the second direction H2;

03162: calculating the first direction difference V1 corresponding to the image pixel according to the first difference E1 corresponding to two adjacent image pixels in the first direction H1 of each image pixel in the second color initial image, according to the first direction difference E1, calculating the second difference value E2 corresponding to the image pixel corresponding to the image pixel in the second direction H2 for the second difference E2 corresponding to the image pixel of each image pixel in the second color initial image;

03163: according to the first direction difference V1 of the image pixel D0 to be updated, the second direction difference V2 of the image pixel D0 to be updated, and the first direction difference V1 and the second direction difference of the surrounding image pixels V2, calculating the first weight value g1, the second weight value g2, the third weight value g3 and the fourth weight value g4;

03164: adjacent to the first side of the image pixel D0 to be updated in the first direction H1 according to the first direction difference V1 of the image pixel D0 to be updated, the second direction difference V2 of the image pixel D0 to be updated and the first direction difference V1 of the four image pixels of D0, the first direction difference V1 of the four image pixels adjacent to the second side of the image pixel D0 in the first direction H1, and the image to be updated and the second direction difference V2 of the four image pixels adjacent to the first side of the pixel D0 in the second direction H2, and the four images adjacent to the second side of the image pixel D0 to be updated in the second direction H2, calculating the second direction difference V2, the first weight g1, the second weight g2, the third weight g3 and the fourth weight g4 of the pixel to obtain the total difference K; and

03165: acquiring the target pixel value D1 of the second color pixel corresponding to the image pixel D0 to be updated according to the mapped image pixel A0 of the first color and the total difference K corresponding to the image pixel D0 to be updated.

Please refer to FIG.2 and FIG.23, step 03161, step 03162, step 03163, step 03164 and step 03165 can all be implemented by the processor 20. That is to say, the processor 20 is further configured to calculate the first difference E1 in the first direction H1 and the second difference E2 in the second direction H2 corresponding to each image pixel in the second color initial image according to the pixel value of the image pixel in the second color initial image and the pixel value of the image pixel in the first color initial image; calculate the difference V1 in the first direction corresponding to the image pixel of each image pixel in the second color based on the first difference E1 corresponding to the two adjacent image pixels in the first direction H1, calculate the second direction difference V2 corresponding to the image pixel according to the second difference E2 corresponding to two adjacent image pixels in the second direction H2 of each image pixel in the initial image of the second color; calculate the first weight value g1, the second weight value g2, the third weight value g3 and the fourth weight value g4 according to the first direction difference V1 of image pixel D0 to be updated, the second direction difference V2 of image pixel D0 to be updated, and the first direction difference V1 and the second direction difference V2 of image pixels around it; calculate to obtain the total difference K according to the first direction difference V1 of the image pixel D0 to be updated, the second direction difference V2 of the image pixel D0 to be updated, the first direction difference V1 of the four image pixels adjacent to the first side of the image pixel D0 to be updated on the first direction H1, and the first side of the four image pixels adjacent to the second side of the image pixel D0 to be updated on the first direction H1 Vector difference V1, second direction difference V2 of four image pixels adjacent to the first side of the image pixel D0 to be updated on the second direction H2, second direction difference V2 of four image pixels adjacent to the second side of the image pixel D0 to be updated on the second direction H2, first weight g1, second weight g2, third weight g3 and fourth weight g4; obtain the target pixel value D1 of the second color pixel corresponding to the image pixel D0 to be updated according to the mapped first color image pixel A0 and the total difference K corresponding to the image pixel D0 to be updated.

The processor 20 calculates the first direction H1 corresponding to each image pixel in the second color initial image according to the pixel value of the image pixel in the second color initial image and the pixel value of the image pixel in the first color initial image. A difference E1 and a second difference E2 in the second direction H2. It should be noted that the first direction H1 is perpendicular to the second direction H2. For convenience of illustration, in the following embodiments, the first direction H1 is the direction parallel to the columns of the image pixels, and the second direction H2 is the direction parallel to the rows of the image pixels. directions are explained. For example, assuming that the image pixel to be calculated is located in row i, column j of the original image of the second color, the corresponding first difference E1 can be calculated by the formula

$$E1(i,j)=(B\_((i,j-1))+B\_((i,j+1)))/2+ [ (2 \times A\_((i,j) )-A ]\_((i,j-2))-A\_((i,j +2)))/4-A\_((i,j))]$$

to obtain. Among them, $B\_((i,j-1))$ represents the pixel value of the image pixel located in the i-th row and j-1 column of the second color initial image, and $B\_((i,j+1))$ represents the pixel value located in the second color initial image value of the image pixel in the i-th row and j+1 column of the image, $A\_((i,j) )$ represents the pixel value of the image pixel in the i-th row and j-column of the initial image of the first color, $A\_((i,j -2) )$ represents the pixel value of the image pixel located in row i, column j-2 of the initial image of the first color, and $A\_((i,j+2) )$ represents the pixel value located in row i, column j+ of the initial image of the first color of the image pixels for the 2 columns. That is to say, the average value of the pixel value difference between twice the pixel value of the image pixel corresponding to the image pixel to be calculated on the initial image of the first color and the pixel value of the image pixel spaced on both sides of the first direction H1, plus the mean value of the sum of the pixel values of the image pixels on both sides of the first direction H1 is subtracted from the pixel value of the image pixel corresponding to the image pixel to be calculated on the initial image of the first color to obtain the first difference E1. The second difference E2 of the image pixel to be calculated can be calculated by the formula

$$E2(i,j)=(B\_((i-1,j))+B\_((i+1,j)))/2+[ ( 2 \times A\_((i,j) )-A ]\_((i-2,j))-A\_((i+2,j)))/4-A\_((i,j))]$$

is obtained. Among them, $B\_((i-1,j))$ represents the pixel value of the image pixel located at row i-1, column j of the second color initial image, and $B\_((i+1,j))$ represents the pixel value located at the second color initial image of the image pixel in the i+1th row and jth column of the image, $A\_((i,j) )$ represents the pixel value of the image pixel in the ith row and jth column of the initial image of the first color, $A\_((i-2 ,j) )$ represents the pixel value of the image pixel located at row i-2, column j of the initial image of the first color, and $A\_((i+2,j) )$ represents the pixel value of the image pixel located at row i+2, column j, of the initial image of the first color. That is to say, the average value of the pixel value difference between twice the pixel value of the image pixel corresponding to the image pixel to be calculated on the initial image of the first color and the pixel value of the image pixel spaced on both sides of the second direction H2, plus the value to be calculated. The mean value of the sum of the pixel values of the image pixels on both sides of the second direction H2 is subtracted from the pixel value of the image pixel corresponding to the image pixel to be calculated on the initial image of the first color to obtain the second difference E2. For example, please refer to FIG.22, the image pixel to be calculated is located in the fifth row and fifth column of the original image of the second color, that is, the first difference E1 and the second difference E2 of the image pixel located in the fifth row and fifth column need to be calculated. The first difference E1 corresponding to the image pixel to be calculated can be calculated by the formula $E1(5,5)=[(B\_((5,4))+B\_((5,6)))/2+ [2\times A\_((5,5) )-A ]\_((5,3))-A\_((5,7)))/4-A\_((5,5))]$ is obtained. The second difference E2 can be calculated by the formula

$$E2(5,5)=[(B\_((4,5))+B\_((6,5)))/2+ [ (2 \times A\_((5,5) )-A ]\_((3,5))-A\_((7,5)))/4-A\_((5,5))]$$

to obtain.

After the processor 20 obtains the first difference E1 and the second difference E2 corresponding to each image pixel on the second color initial image, according to the adjacent image pixels in the second color initial image in the first direction H1, calculate the first direction difference V1 corresponding to the image pixel corresponding to the first difference E1 corresponding to the two image pixels, according to the two images adjacent to each other in the second direction H2 according to the image pixels of each of the original images of the second color and the second difference E2 corresponding to the pixel calculates the second direction difference V2 corresponding to the image pixel. For example, assuming that the image pixel to be calculated is located in row i, column j of the original image of the second color, its corresponding first direction difference V1 can be calculated by the formula V1(i,j)=|E1(i,j- 1) - E1(i,j+1)|, where E1(i,j-1) represents the first difference E1 corresponding to the image pixel located in row i, column j-1 on the initial image of the second color, and E1(i,j+1) represents the first difference E1 corresponding to the image pixel located at row i and column j+1 on the initial image of the second color. That is to say, the first direction difference V1 of the image pixel to be calculated is equal to the absolute value of the first difference E1 corresponding to two image pixels adjacent to the image pixel to be calculated in the first direction H1. The second direction difference V2 corresponding to the image pixel to be calculated can be calculated by the formula V2(i,j)=|E2(i-1,j)-E2(i+1,j)|, where E2(i+1 ,j) represents the second difference E2 corresponding to the image pixel located at row i+1 and column j on the initial image of the second color, and E1(i, j+1) represents the second difference E2 located at row i on the initial image of the second color and the second difference E2 corresponding to the image pixel in the j+1th column. That is to say, the second direction difference V2 of the image pixel to be calculated is equal to the absolute value of the difference between the second difference E2 corresponding to two adjacent image pixels of the image pixel to be calculated in the second direction H2.

After the processor 20 obtains the first direction difference V1 and the second direction difference V2 of the image pixels in the initial image of the second color, according to the first direction difference V1 of the image pixel D0 to be updated, the image pixel to be updated, the second direction difference V2 of D0, and the first direction difference V1 and the second direction difference V2 of the surrounding image pixels, calculate the first weight value g1, the second weight value g2, the third weight value g3, the first weight value g3 and the four weights g4. For example, the first weight value g1 can be calculated by the formula

$$g1=1/(\sum_{a=i-4}^{i}\sum_{b=i-2}^{j+2} V2\ (i,j))^2,$$

the image that will be located four columns to the left of the image pixel D0 to be updated and located two rows above the image pixel D0 to be updated, and within the range of two rows above the image pixel D0 to be updated and the second direction difference value V2 corresponding to the pixel is

$$g2=1/(\sum_{i}^{i+4}\sum_{b=i-2}^{j+2} V2\ (i,j))^2,$$

summed, and then divided by 1 by the square of the result to obtain the first weight value g1; the second weight value g2 can be calculated by the formula which will be located four columns to the right of the image pixel D0 to be updated and located in the to-be-updated The second direction difference V2 corresponding to the two rows above the image pixel D0 and the image pixels located in the range of the two rows above the image pixel D0 to be updated is summed, and then divided by 1 by the square of the result to obtain the second The weight value g2; the third weight value g3 can be calculated by the formula

$$g3=1/(\sum_{i-2}^{i+2}\sum_{b=i-4}^{j} V1\ (i,j))^2,$$

the image pixels that will be located four rows below the image pixel D0 to be updated, two columns to the left of the image pixel D0 to be updated, and two columns to the right of the image pixel D0 to be updated corresponding first direction difference V1 is summed, and then divided by 1 by the square of the result to obtain the third weight value g3; and the fourth weight value g4 can be calculated by the formula

$$g4=1/(\sum_{i-2}^{i+2}\sum_{b=i+44}^{j} V1\ (i,j))^2,$$

which will be located four rows above the image pixel D0 to be updated and located at the first direction difference V1 corresponding to the two columns on the left side of the image pixel D0 and the image pixels located in the two ranges on the right side of the image pixel D0 to be updated is summed, and then divided by 1 by the square of the result to obtain the fourth weights g4.

After the processor 20 obtains the first weight value g1, the second weight value g2, the third weight value g3 and the fourth weight value g4 of the image to be updated, the processor 20 calculates to obtain the total difference K according to the first direction difference V1 of image pixel D0 to be updated, the second direction difference V2 of image pixel D0 to be updated, the first direction difference V1 of four image pixels adjacent to the first side of image pixel D0 to be updated on the first direction H1, the first direction difference V1 of the four image pixels adjacent to the second side of the image pixel D0 to be updated in the first direction H1, the second direction difference V2 of four image pixels adjacent to the first side of the image pixel D0 to be updated in the second direction H2, the second direction difference V2 of the four image pixels adjacent to the second side of the image pixel D0 to be updated on the second direction H2, the first weight g1, the second weight g2, the third weight g3 and the fourth weight g4. For example, the first weight matrix S1 is formed according to the second difference E2 of the image pixel D0 to be updated and the 4 adjacent image pixels below it, and according to the image pixel D0 to be updated and the 4 adjacent images above it, the second difference E2 of the pixels is arranged to form the second weight matrix S2, and the third weight matrix S3 is formed according to the first difference E1 of the image pixel D0 to be updated and the four adjacent image pixels on the left side thereof, and the third weight matrix S3 is formed according to the image to be updated, the first difference E1 of the pixel D0 and its adjacent four image pixels on the right is arranged to form the fourth weight matrix S4, and the total difference K can be calculated by the formula K=(g1×f×S1+g2×f×S2+ g3×f×S3+g4×f'×S4)/(g1+g+g3+g4), where f represents the preset matrix, f represents the transpose of the preset matrix, and in some embodiments, the preset Matrix f=[11111]/5. For example, referring to FIG.22, assuming that the image pixel D0 to be updated is located in row

$$S1=\begin{bmatrix} E2(1,5) \\ E2(2,5) \\ E2(3,5) \\ E2(4,5) \\ E2(5,5) \end{bmatrix};$$

5 and column 5 of the initial image of the second color, then the first weight matrix ; the second weight

$$S2=\begin{bmatrix} E2(5,5) \\ E2(6,5) \\ E2(7,5) \\ E2(8,5) \\ E2(9,5) \end{bmatrix}$$

matrix ; the third weight matrix S3= $E1(5,1)$ $E1(5,2)$ $E1(5,3)$ $E1(5,4)$ $E1(5,5)$ ; the fourth weight matrix S4= $E1(5,5)$ $E1(5,6)$ $E1(5,7)$ $E1(5,8)$ $E1(5,9)$ ; the total difference

$$K=\left( g1\times\frac{[11111]}{5}\times\begin{bmatrix} E2(1,5) \\ E2(2,5) \\ E2(3,5) \\ E2(4,5) \\ E2(5,5) \end{bmatrix} + g2\times\frac{[11111]}{5}\times\begin{bmatrix} E2(5,5) \\ E2(6,5) \\ E2(7,5) \\ E2(8,5) \\ E2(9,5) \end{bmatrix} + g3\times\frac{1}{5}\begin{bmatrix}1\\1\\1\\1\\1\end{bmatrix}\times \right.$$

$$[E1(5,1)\ E1(5,2)\ E1(5,3)\ E1(5,4)\ E1(5,5)] + g4\times\frac{1}{5}\begin{bmatrix}1\\1\\1\\1\\1\end{bmatrix}\times$$

$$\left. [E1(5,5)\ E1(5,6)\ E1(5,7)\ E1(5,8)\ E1(5,9)] \right) \div (g1+g2+g3+g4)$$

After the processor 20 obtains the total difference K, according to the mapped first color image pixel A0 and the total difference K corresponding to the image pixel D0 to be updated, obtain the second color pixel target corresponding to the image pixel D0 to be updated Pixel value D1. For example, the target pixel value D1 of the second color pixel corresponding to the image pixel D0 to be updated is equal to the sum of the mapped first color image pixel A0 and the total difference K corresponding to the image pixel D0 to be updated. Of course, in some embodiments, other interpolation methods may also be used to obtain the target pixel value D1 of the pixel of the second color corresponding to the image pixel D0 to be processed, and no more examples are given here.

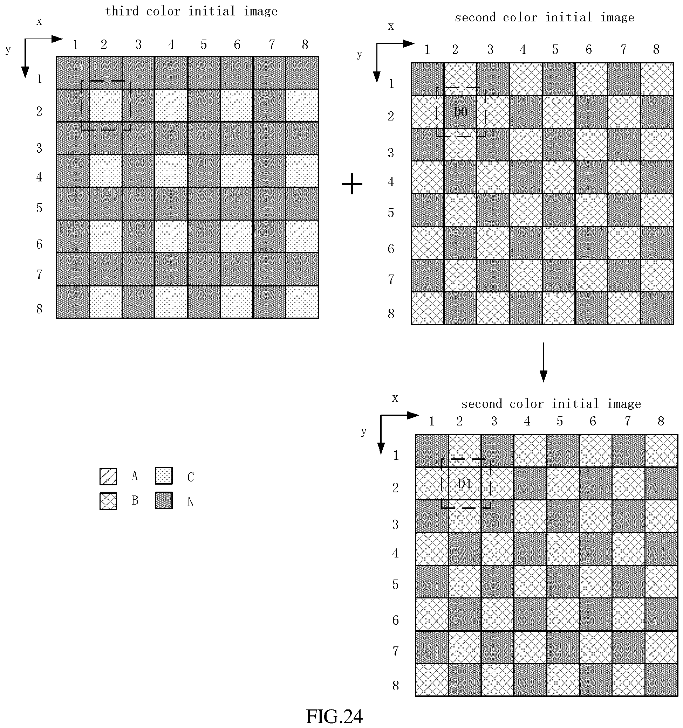

If the image pixel D0 to be updated is not the second color image pixel B, that is, the image pixel D0 to be updated is a null pixel N, and the image pixel at the position corresponding to the image pixel D0 to be updated in the initial image of the third color is, when the third image pixel is C, the initial image of the second color is interpolated according to the initial image of the third color to obtain the updated target pixel value D1 of the second color pixel D0 of the image pixel D0 to be updated. For example, as shown in FIG.24, the image pixel D0 to be updated located in the second row and the second column of the initial image of the second color is a null pixel N, and the image pixel located in the second row and the second column of the third color initial image is the image pixel C of the third color, the initial image of the second color is interpolated according to the initial image of the third color, so as to obtain the updated target pixel value D1 of the pixel D0 of the second color of the image pixel D0 to be updated. The specific implementation method of performing interpolation processing on the second color initial image based on the third color initial image is the same as the specific implementation method of performing interpolation processing on the second color initial image based on the first color initial image in the above embodiment, and will not be repeated here repeat.

After the processor 20 obtains the target pixel values of the second color pixels corresponding to all the second color image pixels in the second color initial image, a plurality of second color pixel target pixel values are arranged to form the second color target image. The position where the target pixel value of the second color pixel is set in the second color target image is the same as the position where the corresponding image pixel is set in the second color initial image.

Please refer to FIG.25, after the processor 20 obtains the second color target image, in some embodiments, processes the second color target image and the first color initial image to obtain the first color target image, and processes the second color target image and a third color initial image to obtain the third color target image, comprises: 0321: perform bilateral filtering processing on the first color initial image according to the second color target image to obtain a first color target image, and perform bilateral filtering processing on a third color initial image according to the second color target image to obtain a third color target image.

Please refer to FIG.2 and FIG.25, step 0321 can also be executed by the processor 20, that is, the processor 20 is also used to perform bilateral filtering on the initial image of the first color according to the target image of the second color to obtain the target image of the first color, according to the target image of the second color performs bilateral filtering on the initial image of the third color to obtain the target image of the third color.

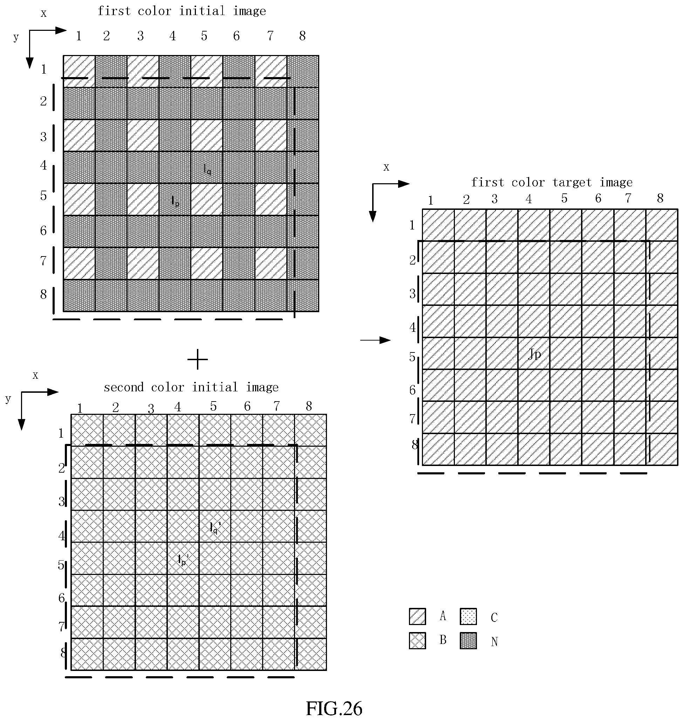

In the following, description will be made by taking the second color target image as an example to perform bilateral filter processing on the first color initial image to obtain the first color target image. In some embodiments, referring to FIG.26, the joint bilateral filtering algorithm is

$$J_p = \frac{1}{k_p} \sum_{q \in \Omega} I_q f(\|p - q\|) g(\|I_p{'} - I_q{'}\|),$$

wherein, $k_p = \sum_{q \in \Omega} f(\|p - q\|) g(\|I_p{'} - I_q{'}\|)$, $J_P$ is the output pixel value, $k_p$ is the sum of weights, $\Omega$ is the filter window, p is the coordinate of the pixel to be filtered in the initial image of the first color, and q is the coordinate of the pixel in the filter window in the initial image of the first color, $I_q$ is the pixel value corresponding to point q, $I_p{'}$ is the pixel value corresponding to the pixel to be filtered in the target image of the second color, $I_q{'}$ is the pixel value corresponding to point q in the target image of the second color, f and g are the weight distribution function, the weight distribution function includes a Gaussian function.

Specifically, the joint bilateral filtering algorithm determines the first distance weight $f(\|p - q\|)$ by the difference between the coordinates of the pixel point p to be filtered and the coordinates of a pixel point q in the filtering window, the example p in the figure The coordinate difference between the point and the q point can be 2, and the second distance weight $g(\|I_p{'} - I_q{'}\|)$, according to the first distance weight of each pixel in the filter window, the second distance weight, the pixel value $I_q$ corresponding to point q in the initial image of the first color, and the weight sum $k_p$ to determine the output pixel value $J_p$.

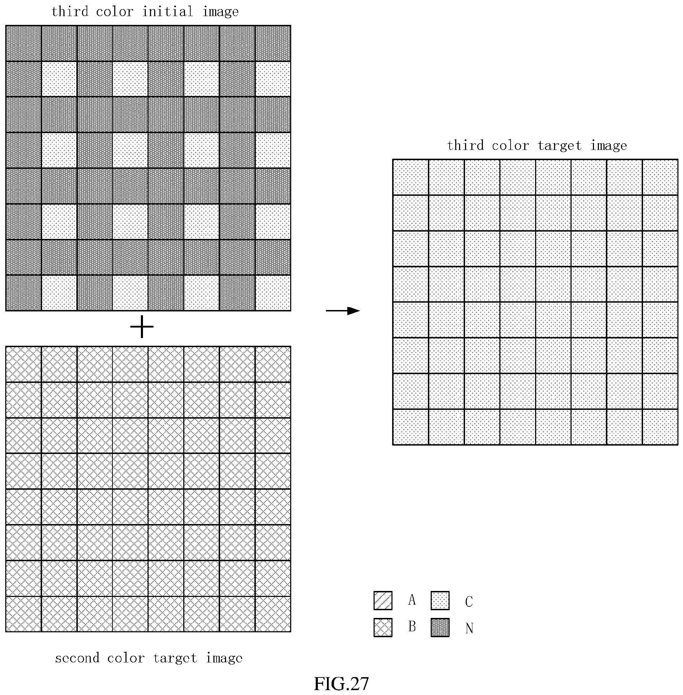

It should be noted that, in the initial image of the first color, the position of the pixel A of the first color image is not set, that is, a null pixel N, whose pixel value is 0. The second color intermediate image set by the output pixel value $J_p$ corresponds to the pixel point p to be filtered, and after one output is completed, the filter window moves to the next image pixel position until all image pixels in the first color initial image are completely filtered, so that the target image of the first color including only the pixel A of the first color image is obtained. Please refer to FIG.27, the specific method for performing bilateral filtering processing on the third color initial image by the second color target image to obtain the third color target image is the same as performing bilateral filtering processing on the first color initial image by the second color target image to obtain the second color target image. The specific method for the initial image of one color is the same, and will not be repeated here.

The image processing system 100 in the embodiment of the present disclosure fuses all the color image pixels in the same subunit into a colorful image arranged in a Bayer array; all the panchromatic image pixels in the same subunit are fused into a panchromatic image, and the panchromatic image and the colorful image are directly used for fusion, and the first color target image and the second color target image that contains panchromatic image information and are fully arranged can be directly output. In this way, the resolution and signal-to-noise ratio of the image can be improved, and the overall photo effect can be improved.

Please refer to FIG.28, in some embodiments, the method for image processing further comprises:

05: obtaining a processed colorful image by performing colorful image processing on the colorful image, obtaining a processed panchromatic image by performing panchromatic image processing on the panchromatic image; and
033: obtain a first color target image, a second color target image and a third color target image by processing the processed colorful image based on the processed panchromatic image.

Please refer to FIG.2 and FIG.28, both step 05 and step 033 can be executed by the processor 20, that is, the processor 20 is also used to perform color image processing on the color image to obtain the processed color image, and perform panchromatic image processing on the panchromatic image to obtain a processed panchromatic image; and process the processed color image according to the processed panchromatic image to obtain a first color target image, a second color target image and a third color target image.

After the processor 20 obtains the colorful image and the panchromatic image, the processor 20 performs colorful image processing on the colorful image to obtain a processed colorful image, and performs panchromatic image processing on the panchromatic image to obtain a processed panchromatic image. It should be noted that, in some embodiments, the colorful image processing includes at least one of dead point compensation processing, vignetting compensation processing, and white balance processing; the panchromatic image processing includes dead point compensation processing.

After obtaining the processed panchromatic image and the processed color image, the processor 20 processes the processed color image according to the processed panchromatic image to obtain the first color target image, the second color target image, the second color target image and the third color target image. The specific implementation manner of processing the processed color image by the processed panchromatic image is the same as the specific implementation manner of processing the color image by the panchromatic image in the above embodiment, and will not be repeated here.

Since the color image is processed by color image processing and the panchromatic image is processed by panchromatic image, its image quality can be improved. At this time, the processed color image is processed according to the processed panchromatic image to obtain the first color target image, the second color target image and the third color target image can improve the image quality of the first color target image, the second color target image and the third color target image.

Please refer to FIG.29, in some embodiments, the method for image processing further comprises:

06: obtaining a color converted target image by performing color conversion based on the first color target image, the second color target image and the third color target image.

Please refer to FIG.2 and FIG.29, step 06 can also be executed by the processor 20, that is, the processor 20 is also used to perform color conversion according to the first color target image, the second color target image and the third color target image to obtain the converted color target image.

The processor 20 performs color conversion processing after obtaining the first color target image, the second color target image and the third color target image, so as to obtain a color converted target image. Color conversion processing is to convert an image from one color space (such as RGB color space) to another color space (such as YUV color space) so as to have a wider range of application scenarios or a more efficient transmission format. In a specific embodiment, the step of color conversion processing can be to convert the R, G and B channel pixel values of all pixel values in the image to obtain the Y, U and V channel pixel values by the following formula: (1) $Y=0.30 R+0.59G+0.11B$; (2) $U=0.493 (B-Y)$; (3) $V=0.877 (R-Y)$; thus converting the image from the RGB color space to the YUV color space. Since the luminance signal Y and the chrominance signals U and V in the YUV color space are separated, and the human eye is more sensitive to luminance than chromaticity, this application uses the first color target image, the second color target image and the third color target image to convert color to obtain the color conversion and then transmitted to the image processor (not shown) for subsequent processing, which can reduce the amount of information in the image without affecting the viewing effect of the image, thereby improving the transmission efficiency of the image.

Please refer to FIG.30, the present disclosure also provides an electronic device 1000. The electronic device 1000 in the embodiment of the present disclosure comprises a lens 300, a housing 200 and the system 100 for image processing in any one of the above embodiments. The lens 300 and the system 100 for image processing are combined with the casing 200. The lens 300 cooperates with the image sensor 10 of the system 100 for image processing to form an image.

The electronic device 1000 may be a mobile phone, a tablet computer, a notebook computer, a smart wearable device (such as a smart watch, a smart bracelet, smart glasses, a smart helmet), a drone, a head-mounted display device, etc., which is not limited here.

The electronic device 1000 in the embodiment of the present disclosure fuses all the colorful image pixels in the same subunit into a colorful image arranged in a Bayer array in the system 100 for image processing; fuses all the panchromatic image pixels in the same subunit into a panchromatic image, and directly use the panchromatic image and the colorful image to fuse, and can directly output the first color target image, the second color target image and the third color target image that contain panchromatic image information and are fully arranged. In this way, the resolution and signal-to-noise ratio of the image can be improved, and the overall photo effect can be improved.

Please refer to FIG.31, the present disclosure also provides a non-transitory computer-readable storage medium 400 containing computer instructions. When the computer instructions are executed by the processor 60, the processor 60 is made to execute the method for image processing in any one of the above-mentioned embodiments.

For example, please refer to FIG.1 and FIG.31, when the computer instructions are executed by the processor 60, the processor 60 is made to perform the following steps:

01: obtain the original image by exposing the pixel array 11, the image pixels in the original image comprising colorful image pixels and panchromatic image pixels;

02: obtain a color image based on all the color image pixels in the same subunit, and obtain a panchromatic image based on all the panchromatic image pixels in the same subunit, and the image pixels in the colorful image are arranged in a Bayer array; and

03: process the colorful image according to the panchromatic image to obtain the first color target image, the second color target image and the third color target image, wherein all the image pixels in the first color target image are the first color image All image pixels in the second color target image are the second color image pixels, and all image pixels in the third color target image are the third color image pixels.

It should be noted that the processor 60 can be the same processor as the processor 20 arranged in the system 100 for image processing, and the processor 60 can also be arranged in the electronic device 1000, that is, the processor 60 can also be arranged in the system 100 for image processing. The processors 20 in the system 100 for image processing are not the same processor, which is not limited here.

In the description of this specification, reference to the terms "one embodiment", "some embodiments", "exemplary embodiments", "example", "specific examples" or "some examples" etc. The specific features, structures, materials or features described in the manner or example are included in at least one embodiment or example of the present disclosure.

In this specification, schematic representations of the above terms do not necessarily refer to the same embodiment or example. Furthermore, the described specific features, structures, materials or characteristics may be combined in any suitable manner in any one or more embodiments or examples. In addition, those skilled in the art can combine and combine different embodiments or examples and features of different embodiments or examples described in this specification without conflicting with each other.

Any process or method descriptions in flowcharts or otherwise described herein may be understood to represent modules, segments or portions of code comprising one or more executable instructions for implementing specific logical functions or steps of the process, and the scope of preferred embodiments of the present disclosure includes additional implementations in which functions may be performed out of the order shown or discussed, including in substantially simultaneous fashion or in reverse order depending on the functions involved, which should be understood by those skilled in the art to which the embodiments of the present disclosure belong.

Although the implementation of the present disclosure has been shown and described above, it can be understood that the above-mentioned implementation is exemplary and should not be construed as limiting the disclosure, and those skilled in the art can make changes, modifications, substitutions and variations to the above-mentioned embodiments.

**Claims**

1. Method for image processing, for an image sensor, characterizing that, the image sensor comprises a pixel array, the pixel array comprises a plurality of panchromatic photosensitive pixels and a plurality of colorful photosensitive pixels, the plurality of colorful photosensitive pixels comprise a first color photosensitive pixel, a second color photosensitive pixel and a third color photosensitive pixel with different spectral responses, the plurality of colorful photosensitive pixels have a narrower spectral response than the plurality of panchromatic photosensitive pixel, and both the first color photosensitive pixel and the third color photosensitive pixels have a narrower spectral response than the second color photosensitive pixels, the pixel array comprises a plurality of minimal repeating units, each of the minimal repeating unit comprises a plurality of subunits, each of the subunit comprises at least one single-color photosensitive pixel and at least one panchromatic photosensitive pixel; the method for image processing comprising:

> obtaining an original image by exposing the pixel array, the image pixels in the original image comprising colorful image pixels and panchromatic image pixels;
> obtaining a colorful image based on all the colorful image pixels in the subunit, and obtaining a panchromatic image based on all the panchromatic image pixels in the subunit, the image pixels in the colorful image being in a Bayer array arrangement; and
> obtaining a first color target image, a second color target image and a third color target image by processing the colorful image based on the panchromatic image, wherein, all image pixels in the first color target image are the first image pixel, all image pixels in the second color target image are the second color image pixels, and all image pixels in the third color target image are the third color image pixels.

2. The method for image processing of claim 1, characterizing that, the method for image processing further comprising:

> obtaining a first color initial image, a second color initial image, and a third color initial image by separating the first color image pixels, the second color image pixels, and the third color image pixels in the colorful image;
> the obtaining a first color target image, a second color target image and a third color target image by processing the colorful image based on the panchromatic image comprising:
>
> > if the panchromatic image pixel in the panchromatic image corresponding to the image pixel to be updated in the second color initial image is not overexposed, calculating an updated pixel value of the image pixel to be updated based on the panchromatic image and the second color initial image and identifying the updated pixel value of the image pixel to be updated as a target pixel value of the second color pixel; and
> > if the panchromatic image pixel in the panchromatic image corresponding to the image pixel to be updated in the second color initial image is overexposed, calculating an updated pixel value of the image pixel to be updated based on the first color initial image and the second color initial image, or based on the third color initial image and the second color initial image, and identifying the updated pixel value of the image pixel to be updated as a target pixel value of the second color pixel; until the target pixel values of the second color pixels corresponding to all image pixels in the second color initial image are obtained, obtaining the second color target image;
> > obtaining the first color target image by processing the second color target image and the first color initial image, and obtaining the third color target image by processing the second color target image and the third color initial image.

3. The method for image processing of claim 2, characterizing that, wherein the image pixel of the second color initial image comprises a second color image pixel and a null pixel, the pixel value of the null pixel being zero; the calculating an updated pixel value of the image pixel to be updated based on the panchromatic image and the second color initial image and identifying the updated pixel value of the image pixel to be updated as a target pixel value of the second color pixel comprising:
selecting a first window centered on the image pixel to be updated in the second color initial image, and selecting a second window corresponding to the first window in the panchromatic image, the panchromatic image pixels at the center of the second window correspond to the image pixel to be updated and identified as a mapped panchromatic image pixel;

> obtaining a first matrix based on pixel information of all image pixels in the first window;
> obtaining a second matrix based on the pixel values of the mapped panchromatic image pixels, the pixel values of all panchromatic image pixels in the second window, the first matrix and a preset weight function; and
> obtaining the updated target pixel value of the second color pixel of the image pixel to be updated based on the pixel values of the mapped panchromatic image pixels, the pixel values of all image pixels in the first window, the pixel values of all panchromatic image pixels in the second window, and the second matrix.

4. The method for image processing of claim 3, characterizing that, wherein obtaining a first matrix based on pixel information of all image pixels in the first window, comprising:

> mapping the array arrangement of the image pixels in the first window to the array arrangement of the first matrix;
> identifying the value in the first matrix corresponding to the null pixel in the first window as a first value; and
> identifying the value of the position in the first matrix corresponding to the second color image pixel in the first window as a second value.

5. The method for image processing of claim 3, characterizing that, wherein the image pixels in the first window and the second window are arranged in M*M, M representing an odd number and the first matrix being arranged in M*M.

6. The method for image processing of claim 3, characterizing that, wherein obtaining a second matrix based on the pixel values of the mapped panchromatic image pixels, the pixel values of all panchromatic image pixels in the second window, the first matrix and a preset weight function, comprising:

mapping the matrix arrangement of image pixels in the second window to the array arrangement of the second matrix;
obtaining the deviation value corresponding to the position of the panchromatic image pixel in the second matrix based on the pixel value of each panchromatic image pixel in the second window and the mapped pixel value of the panchromatic image pixel;
obtaining the value of the corresponding position in the second matrix based on the deviation value, a preset function and the value of the same position in the first matrix.

7. The method for image processing of claim 3, characterizing that, wherein obtaining the updated target pixel value of the second color pixel of the image pixel to be updated based on the pixel values of the mapped panchromatic image pixels, the pixel values of all image pixels in the first window, the pixel values of all panchromatic image pixels in the second window, and the second matrix, comprising:

calculating the first weighted value based on the first window matrix formed by the pixel values of all image pixels in the first window and the second matrix, and calculating a second weighted value based on a second window matrix formed by pixel values of all image pixels in the second window and the second matrix;
obtaining the updated target pixel value of the second color pixel of the image pixel to be updated based on the mapped pixel value of the panchromatic image pixel, the first weighted value, and the second weighted value.

8. The method for image processing of claim 2, characterizing that, wherein the image pixel of the first color initial image comprises a first color image pixel and a null pixel, the image pixel of the third color initial image comprises a third color image pixel and a null pixel; calculating an updated pixel value of the image pixel to be updated based on the first color initial image and the second color initial image, or based on the third color initial image and the second color initial image, and identifying the updated pixel value of the image pixel to be updated as a target pixel value of the second color pixel, comprising:

if the image pixel to be updated is the second color image pixel, identifying the value of the original pixel of the second color image pixel as the value of the target pixel of the second color pixel after updating the pixel value of the image pixel to be updated;
if the position corresponding to the image pixel to be updated in the first color initial image is the first color image pixel, performing interpolation processing on the second color initial image based on the first color initial image, and obtaining the updated target pixel value of the second color pixel of the image pixel to be updated;
if the position corresponding to the image pixel to be updated in the initial image of the third color is the third color image pixel, performing interpolation processing on the second color initial image based on the third color initial image, and obtaining the updated target pixel value of the second color pixel of the image pixel to be updated.

9. The method for image processing of claim 2, characterizing that, wherein obtaining the first color target image by processing the second color target image and the first color initial image, and obtaining the third color target image by processing the second color target image and the third color initial image, comprising:
obtaining the first color target image by performing a bilateral filtering process on the first color initial image based on the second color target image, and obtaining the third color target image by performing a bilateral filtering process on the third color initial image based on the second color target image.

10. The method for image processing of claim 1, characterizing that, the method for image processing further comprising:

obtaining a processed colorful image by performing colorful image processing on the colorful image, obtaining a processed panchromatic image by performing panchromatic image processing on the panchromatic image;
obtaining a fully arranged first color target image, a fully arranged second color target image and a fully arranged third color target image by processing of the color image based on the panchromatic image comprising:
obtain a first color target image, a second color target image and a third color target image by processing the processed colorful image based on the processed panchromatic image.

11. The method for image processing of claim 1, characterizing that, the method for image processing further comprising:
obtaining a color converted target image by performing color conversion based on the first color target image, the second color target image and the third color target image.

12. A system for image processing, characterizing that, comprising:
an image sensor, the image sensor comprises a pixel array, the pixel array comprises a plurality of panchromatic photosensitive pixels and a plurality of colorful photosensitive pixels, the plurality of colorful photosensitive pixels comprise a first color photosensitive pixel, a second color photosensitive pixel and a third color photosensitive pixel with different spectral responses, the plurality of colorful photosensitive pixels have a narrower spectral response than the plurality of panchromatic photosensitive pixel, and both the first color photosensitive pixel and the third color photosensitive pixels have a narrower spectral response than the second color photosensitive pixels, the pixel array comprises a plurality of minimal repeating units, each of the minimal repeating unit comprises a plurality of subunits, each of the subunit comprises at least one single-color photosensitive pixel and at least one panchromatic photosensitive pixel; and

a processor, the processor is configured to
obtain an original image by exposing the pixel array, the image pixels in the original image comprising colorful image pixels and panchromatic image pixels;
obtain a colorful image based on all the colorful image pixels in the subunit, and obtain a panchromatic image based on all the panchromatic image pixels in the subunit, the image pixels in the colorful image being in a Bayer array arrangement; and
obtain a first color target image, a second color target image and a third color target image by processing the colorful image based on the panchromatic image, wherein, all image pixels in the first color target image are the first image pixel, all image pixels in the second color target image are the second color image pixels, and all image pixels in the third color target image are the third color image pixels.

13. The system for image processing of claim 12, characterizing that, the system is further configured to:

obtain a first color initial image, a second color initial image, and a third color initial image by separating the first color image pixels, the second color image pixels, and the third color image pixels in the colorful image;
if the panchromatic image pixel in the panchromatic image corresponding to the image pixel to be updated in the second color initial image is not overexposed, calculate an updated pixel value of the image pixel to be updated based on the panchromatic image and the second color initial image and identifying the updated pixel value of the image pixel to be updated as a target pixel value of the second color pixel; and if the panchromatic image pixel in the panchromatic image corresponding to the image pixel to be updated in the second color initial image is overexposed, calculate an updated pixel value of the image pixel to be updated based on the first color initial image and the second color initial image, or based on the third color initial image and the second color initial image, and identify the updated pixel value of the image pixel to be updated as a target pixel value of the second color pixel; until the target pixel values of the second color pixels corresponding to all image pixels in the second color initial image are obtained, obtain the second color target image;
obtain the first color target image by processing the second color target image and the first color initial image, and obtain the third color target image by processing the second color target image and the third color initial image.

14. The system for image processing of claim 13, characterizing that, wherein the image pixel of the second color initial image comprises a second color image pixel and a null pixel, the pixel value of the null pixel being zero; the processor is further configured to:
select a first window centered on the image pixel to be updated in the second color initial image, and select a second window corresponding to the first window in the panchromatic image, the panchromatic image pixels at the center of the second window correspond to the image pixel to be updated and identified as a mapped panchromatic image pixel;

obtain a first matrix based on pixel information of all image pixels in the first window;
obtain a second matrix based on the pixel values of the mapped panchromatic image pixels, the pixel values of all panchromatic image pixels in the second window, the first matrix and a preset weight function; and

obtain the updated target pixel value of the second color pixel of the image pixel to be updated based on the pixel values of the mapped panchromatic image pixels, the pixel values of all image pixels in the first window, the pixel values of all panchromatic image pixels in the second window, and the second matrix.

15. The system for image processing of claim 14, characterizing that, the processor is further configured to:

map the array arrangement of the image pixels in the first window to the array arrangement of the first matrix; identify the value in the first matrix corresponding to the null pixel in the first window as a first value; and identify the value of the position in the first matrix corresponding to the second color image pixel in the first window as a second value.

16. The system for image processing of claim 14, characterizing that, wherein the image pixels in the first window and the second window are arranged in M*M, M representing an odd number and the first matrix being arranged in M*M.

17. The system for image processing of claim 14, characterizing that, the processor is further configured to:

map the matrix arrangement of image pixels in the second window to the array arrangement of the second matrix; obtain the deviation value corresponding to the position of the panchromatic image pixel in the second matrix based on the pixel value of each panchromatic image pixel in the second window and the mapped pixel value of the panchromatic image pixel; obtain the value of the corresponding position in the second matrix based on the deviation value, a preset function and the value of the same position in the first matrix.

18. The system for image processing of claim 14, characterizing that, the processor is further configured to:

calculate the first weighted value based on the first window matrix formed by the pixel values of all image pixels in the first window and the second matrix, and calculate a second weighted value based on a second window matrix formed by pixel values of all image pixels in the second window and the second matrix; obtain the updated target pixel value of the second color pixel of the image pixel to be updated based on the mapped pixel value of the panchromatic image pixel, the first weighted value, and the second weighted value.

19. The system for image processing of claim 13, characterizing that, wherein the image pixel of the first color initial image comprises a first color image pixel and a null pixel, the image pixel of the third color initial image comprises a third color image pixel and a null pixel; the processor is further configured to:

if the image pixel to be updated is the second color image pixel, identifying the value of the original pixel of the second color image pixel as the value of the target pixel of the second color pixel after updating the pixel value of the image pixel to be updated; if the position corresponding to the image pixel to be updated in the first color initial image is the first color image pixel, performing interpolation processing on the second color initial image based on the first color initial image, and obtaining the updated target pixel value of the second color pixel of the image pixel to be updated; if the position corresponding to the image pixel to be updated in the initial image of the third color is the third color image pixel, performing interpolation processing on the second color initial image based on the third color initial image, and obtaining the updated target pixel value of the second color pixel of the image pixel to be updated.

20. The system for image processing of claim 13, characterizing that, the processor is further configured to: obtain the first color target image by performing a bilateral filtering process on the first color initial image based on the second color target image, and obtaining the third color target image by performing a bilateral filtering process on the third color initial image based on the second color target image.

21. The system for image processing of claim 12, characterizing that, the processor is further configured to:

obtain a processed colorful image by performing colorful image processing on the colorful image, obtain a processed panchromatic image by performing panchromatic image processing on the panchromatic image; obtain a first color target image, a second color target image and a third color target image by processing the processed colorful image based on the processed panchromatic image.

**22.** The system for image processing of claim 12, characterizing that, the processor is further configured to:
obtain a color converted target image by performing color conversion based on the first color target image, the second color target image and the third color target image.

**23.** An electronic device, characterizing that, comprising:

a lens;
a housing; and
the system for image processing of any one of claims 12 to 22, the lens and the system for image processing are couple to the housing, the lens and the image sensor of the system for image processing are configured to form an image by cooperation.

**24.** A non-transitory computer-readable storage medium containing computer instructions, characterizing that, when the computer instructions are executed by a processor, the processor executes the method for image processing described in any one of claims 1 to 11.

obtaining an original image by exposing the pixel array, image pixels in the original image comprising colorful image pixels and panchromatic image pixels —01

obtaining a color image based on all the colorful image pixels in the same subunit, and obtaining a panchromatic image based on all the panchromatic image pixels in the same subunit —02

obtaining the first color target image, the second color target image and the third color target image by processing the colorful image based on the panchromatic image —03

FIG.1

100

system for image processing

image sensor    10

processor    20

FIG.2

10

12                              11

vertical
driving
unit                        pixel array

control
unit                 column processing unit                14

                    horizontal driving unit              15

13

FIG.3

110

                                    113
                                    112

                                    111

FIG.4

111

VPIX

RG ⊣ ⌐ 1113

TG

FD 1112

1114

SEL ⊣ 1115

OUT

1111

**FIG.5**

D1    UA      UB

UA               UB

                      A

                      B

               UC    C

                      W

D2      UC

**FIG.6**

D1    UA      UB

UA               UB

                      A

                      B

               UC    C

                      W

D2      UC

**FIG.7**

FIG.8

colorful image

panchromatic image

◨ A  ⊠ B  ▦ C  ☐ W

FIG.9

obtaining an original image by exposing the pixel array, image pixels in the original image comprising colorful image pixels and panchromatic image pixels — 01

obtaining a color image based on all the colorful image pixels in the same subunit, and obtaining a panchromatic image based on all the panchromatic image pixels in the same subunit — 02

obtaining a first color initial image, a second color initial image, and a third color initial image by separating the first color image pixels, the second color image pixels, and the third color image pixels in the colorful image — 04

if the panchromatic image pixel in the panchromatic image W0 corresponding to the image pixel D0 to be updated in the second color initial image is not overexposed, calculating an updated pixel value of the image pixel to be updated based on the panchromatic image and the second color initial image and identifying the updated pixel value of the image pixel to be updated as a target pixel value of the second color pixel; and if the panchromatic image pixel in the panchromatic image corresponding to the image pixel to be updated in the second color initial image is overexposed, calculating an updated pixel value of the image pixel to be updated based on the first color initial image and the second color initial image, or based on the third color initial image and the second color initial image, and identifying the updated pixel value of the image pixel to be updated as a target pixel value of the second color pixel; until the target pixel values of the second color pixels corresponding to all image pixels B in the second color initial image are obtained, obtaining the second color target image — 031

obtaining the first color target image by processing the second color target image and the first color initial image, and obtaining the third color target image by processing the second color target image and the third color initial image — 032

FIG.10

FIG.11

panchromatic image

second color initial image

second color initial image

FIG.12

031 ⟍

selecting a first window centered on the image pixel
to be updated in the second color initial image, and
selecting a second window corresponding to the first
window in the panchromatic image

0311

obtaining a first matrix based on pixel information
of all image pixels in the first window

0312

obtaining a second matrix based on the pixel values
of the mapped panchromatic image pixels, the pixel
values of all panchromatic image pixels in the second
window, the first matrix, and a preset weight
function

0313

obtaining the updated target pixel value of the
second color pixel of the image pixel to be updated
based on the pixel values of the mapped panchromatic
image pixels, the pixel values of all image pixels in
the first window, the pixel values of all
panchromatic image pixels in the second window, and
the second matrix

0314

FIG.13

C1

x

y

second color initial image

1' — 1 — 2 — 3 — 4 — 5 — 6   7   8

1

2

3   D0

4

5

6

7

8

## FIG.14

0312

mapping the array arrangement of the image pixels in the first window to the array arrangement of the first matrix     03121

identifying the value in the first matrix corresponding to the null pixel in the first window as a first value     03122

identifying the value of the position in the first matrix corresponding to the second color image pixel in the first window as a second value     03123

## FIG.15

first window

$$I1= \begin{matrix} X11 & X12 & X13 & X14 & X15 \\ X21 & X22 & X23 & X24 & X25 \\ X31 & X32 & X33 & X34 & X35 \\ X41 & X42 & X43 & X44 & X45 \\ X51 & X52 & X53 & X54 & X55 \end{matrix}$$

A    C
B    N

$$I1= \begin{matrix} 0 & 1 & 0 & 1 & 0 \\ 1 & 0 & 1 & 0 & 1 \\ 0 & 1 & 0 & 1 & 0 \\ 1 & 0 & 1 & 0 & 1 \\ 0 & 1 & 0 & 1 & 0 \end{matrix}$$

FIG.16

0313

mapping the matrix arrangement of image pixels in the second window to the array arrangement of the second matrix ⟋ 03131

obtaining the deviation value corresponding to the position of the panchromatic image pixel in the second matrix based on the pixel value of each panchromatic image pixel in the second window and the mapped pixel value of the panchromatic image pixel ⟋ 03132

obtaining the value of the corresponding position in the second matrix based on the deviation value, a preset function and the value of the same position in the first matrix ⟋ 03133

FIG.17

FIG.18

0314

calculating the first weighted value based on the first window matrix formed by the pixel values of all image pixels in the first window and the second matrix, and calculating a second weighted value based on a second window matrix formed by pixel values of all image pixels in the second window and the second matrix

03141

obtaining the updated target pixel value of the second color pixel of the image pixel to be updated based on the mapped pixel value of the panchromatic image pixel, the first weighted value, and the second weighted value

03142

FIG.19

031

if the image pixel to be updated is the second color image pixel, identifying the value of the original pixel of the second color image pixel as the value of the target pixel of the second color pixel after updating the pixel value of the image pixel to be updated

0315

if the position corresponding to the image pixel to be updated in the first color initial image is the first color image pixel, performing interpolation processing on the second color initial image based on the first color initial image, and obtaining the updated target pixel value of the second color pixel of the image pixel to be updated

0316

if the position corresponding to the image pixel to be updated in the initial image of the third color is the third color image pixel, performing interpolation processing on the second color initial image based on the third color initial image, and obtaining the updated target pixel value of the second color pixel of the image pixel to be updated

0317

FIG.20

second color initial image

second color initial image

FIG.21

first color initial image

second color initial image

second color initial image

A    C
B    N

FIG.22

0316

according to the pixel value of the image pixel in the original image of the second color and the pixel value of the image pixel in the original image of the first color, calculating the first pixel in the first direction corresponding to each image pixel in the original image of the second color the difference and the second difference in the second direction
03161

calculating the first direction difference corresponding to the image pixel according to the first difference corresponding to two adjacent image pixels in the first direction of each image pixel in the second color initial image, according to the first direction difference, calculating the second difference value corresponding to the image pixel corresponding to the image pixel in the second direction for the second difference corresponding to the image pixel of each image pixel in the second color initial image
03162

according to the first direction difference of the image pixel to be updated, the second direction difference of the image pixel to be updated, and the first direction difference and the second direction difference of the surrounding image pixels, calculating the first weight value, the second weight value, the third weight value and the fourth weight value
03163

adjacent to the first side of the image pixel to be updated in the first direction according to the first direction difference of the image pixel to be updated, the second direction difference of the image pixel to be updated and the first direction difference of the four image pixels of, the first direction difference of the four image pixels adjacent to the second side of the image pixel in the first direction, and the image to be updated and the second direction difference of the four image pixels adjacent to the first side of the pixel in the second direction, and the four images adjacent to the second side of the image pixel to be updated in the second direction, calculating the second direction difference, the first weight g1, the second weight, the third weight and the fourth weight of the pixel to obtain the total difference
03164

acquiring the target pixel value of the second color pixel corresponding to the image pixel to be updated according to the mapped image pixel of the first color and the total difference corresponding to the image pixel to be updated
03165

FIG.23

third color initial image

second color initial image

second color initial image

A   C

B   N

FIG.24

obtaining an original image by exposing the pixel array, image pixels in the original image comprising colorful image pixels and panchromatic image pixels ⌐01

obtaining a color image based on all the colorful image pixels in the same subunit, and obtaining a panchromatic image based on all the panchromatic image pixels in the same subunit ⌐02

obtaining a first color initial image, a second color initial image, and a third color initial image by separating the first color image pixels, the second color image pixels, and the third color image pixels in the colorful image ⌐04

if the panchromatic image pixel in the panchromatic image corresponding to the image pixel to be updated in the second color initial image is not overexposed, calculating an updated pixel value of the image pixel to be updated based on the panchromatic image and the second color initial image and identifying the updated pixel value of the image pixel to be updated as a target pixel value of the second color pixel; and if the panchromatic image pixel in the panchromatic image corresponding to the image pixel to be updated in the second color initial image is overexposed, calculating an updated pixel value of the image pixel to be updated based on the first color initial image and the second color initial image, or based on the third color initial image and the second color initial image, and identifying the updated pixel value of the image pixel to be updated as a target pixel value of the second color pixel; until the target pixel values of the second color pixels corresponding to all image pixels in the second color initial image are obtained, obtaining the second color target image ⌐031

obtaining the first color target image by performing a bilateral filtering process on the first color initial image based on the second color target image, and obtaining the third color target image by performing a bilateral filtering process on the third color initial image based on the second color target image ⌐0321

FIG.25

x

first color initial image

y

|  | 1 | 2 | 3 | 4 | 5 | 6 | 7 | 8 |

1

2

3

4     I_q

5     I_p

6

7

8

+

x

second color initial image

y

|  | 1 | 2 | 3 | 4 | 5 | 6 | 7 | 8 |

1

2

3

4     I_q'

5     I_p'

6

7

8

x

first color target image

|  | 1 | 2 | 3 | 4 | 5 | 6 | 7 | 8 |

1

2

3

4

5     Jp

6

7

8

A    C

B    N

FIG.26

third color initial image

third color target image

second color target image

A　　C

B　　N

FIG.27

obtaining an original image by exposing the pixel
array, image pixels in the original image comprising
colorful image pixels and panchromatic image pixels
⟍01

obtaining a color image based on all the colorful
image pixels in the same subunit, and obtaining a
panchromatic image based on all the panchromatic
image pixels in the same subunit
⟍02

obtaining a processed colorful image by performing
colorful image processing on the colorful image,
obtaining a processed panchromatic image by
performing panchromatic image processing on the
panchromatic image
⟍05

obtaining a first color target image, a second color
target image and a third color target image by
processing the processed colorful image based on the
processed panchromatic image
⟍033

FIG.28

obtaining an original image by exposing the pixel array, image pixels in the original image comprising colorful image pixels and panchromatic image pixels ⟋ 01

obtaining a color image based on all the colorful image pixels in the same subunit, and obtaining a panchromatic image based on all the panchromatic image pixels in the same subunit ⟋ 02

obtaining the first color target image, the second color target image and the third color target image by processing the colorful image based on the panchromatic image ⟋ 03

obtaining a color converted target image by performing color conversion based on the first color target image, the second color target image and the third color target image ⟋ 06

FIG.29

1000

300

100

200

FIG.30

400

non-transitory computer-readable
storage medium

computer
instructions

60

processor

FIG.31

## INTERNATIONAL SEARCH REPORT

| International application No. |
|---|
| **PCT/CN2021/075315** |

| A. | CLASSIFICATION OF SUBJECT MATTER |
|---|---|

H04N 5/359(2011.01)i; H04N 9/64(2006.01)i

According to International Patent Classification (IPC) or to both national classification and IPC

| B. | FIELDS SEARCHED |
|---|---|

Minimum documentation searched (classification system followed by classification symbols)

H04N; G06T

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 图像, 像素, 传感器, 阵列, 感光, 全色, 彩色, 白色, 单颜色, 单色, 拜耳, 曝光, 过曝, image, pixel, sensor, array, photosensitive, panchromatic, single colo?r, colo?r, white, Bayer, expos+, overexpos+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111835971 A (GUANGDONG OPPO MOBILE TELECOMMUNICATIONS CORP., LTD.) 27 October 2020 (2020-10-27)<br>claims 1-14 | 1, 10-12, 21-24 |
| A | CN 111899178 A (OPPO GUANGDONG MOBILE COMMUNICATIONS CO., LTD.) 06 November 2020 (2020-11-06)<br>entire document | 1-24 |
| A | CN 111757006 A (OPPO GUANGDONG MOBILE COMMUNICATIONS CO., LTD.) 09 October 2020 (2020-10-09)<br>entire document | 1-24 |
| A | US 2017085806 A1 (MOTOROLA MOBILITY L.L.C.) 23 March 2017 (2017-03-23)<br>entire document | 1-24 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2021** | **29 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/075315**

| Patent document cited in search report | | | Publication date (day/month/year) | Patent family member(s) | | | Publication date (day/month/year) |
|---|---|---|---|---|---|---|---|
| CN | 111835971 | A | 27 October 2020 | None | | | |
| CN | 111899178 | A | 06 November 2020 | None | | | |
| CN | 111757006 | A | 09 October 2020 | None | | | |
| US | 2017085806 | A1 | 23 March 2017 | GB | 2544851 | A | 31 May 2017 |
| | | | | DE | 102016117151 | A1 | 23 March 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011582503